# EUROPEAN PATENT APPLICATION

(11) **EP 4 836 533 A1**
(43) Date of publication of application: **04.11.2026**
(21) Application number: 23962529.6
(22) Date of filing: 25.12.2023
(51) Int. Cl.: H04W 52/02

(54) **METHOD AND APPARATUS FOR WIRELESS COMMUNICATION**

(71) Applicant: Quectel Wireless Solutions Co., Ltd., Shanghai 201601 (CN)
(72) Inventor: LYU, Ling, Shanghai 201601 (CN); ZHAO, Zheng, Shanghai 201601 (CN)
(74) Representative: Fish & Richardson P.C.
(86) International application number: PCT/CN2023/141599
(87) International publication number: WO 2025/137831

(57) **Abstract**

The present application provides a method and apparatus for wireless communication, which are conducive to reducing power consumption of a terminal device in a scenario of discontinuous network coverage. The method includes: determining, by a terminal device, first time information; and executing, by the terminal device based on the first time information, switching from a first state to a second state, where the first time information is related to a first time period and/or a second time period, the first time period is a time period from a current instant to a start instant at which the terminal device enters network non-coverage, and the second time period is a duration of the network non-coverage.

## Description

### TECHNICAL FIELD

The present application relates to the field of communications technologies, and more specifically, to a method and apparatus for wireless communication.

### BACKGROUND

With orbiting of a satellite in a non-terrestrial network (non-terrestrial network, NTN), a terminal device may be in a scenario of network non-coverage. Due to discontinuous network coverage, how a terminal device with a relatively high power saving requirement works and how a network side performs configuration are worth studying. For example, in an NTN system based on an internet of things (internet of things, IoT), when an internet of things terminal device releases a radio resource control (radio resource control, RRC) connection or when the terminal device is woken up is a problem to be resolved.

### SUMMARY

The present application provides a method and apparatus for wireless communication. The following describes aspects related to embodiments of the present application.

According to a first aspect, a method for wireless communication is provided, including: determining, by a terminal device, first time information; and executing, by the terminal device based on the first time information, switching from a first state to a second state, where the first time information is related to a first time period and/or a second time period, the first time period is a time period from a current instant to a start instant at which the terminal device enters network non-coverage, and the second time period is a duration of the network non-coverage.

According to a second aspect, a method for wireless communication is provided, including: determining, by a network device, first time information; and instructing, by the network device based on the first time information, a terminal device to execute switching from a first state to a second state, where the first time information is related to a first time period and/or a second time period, the first time period is a time period from a current instant to a start instant at which the terminal device enters network non-coverage, and the second time period is a duration of the network non-coverage.

According to a third aspect, an apparatus for wireless communication is provided, where the apparatus is a terminal device, and the apparatus includes a determining unit, determining first time information; and a first execution unit, executing, based on the first time information, switching from a first state to a second state, where the first time information is related to a first time period and/or a second time period, the first time period is a time period from a current instant to a start instant at which the terminal device enters network non-coverage, and the second time period is a duration of the network non-coverage.

According to a fourth aspect, an apparatus for wireless communication is provided, where the apparatus is a network device, and the apparatus includes a determining unit, determining first time information; and an instructing unit, instructing, based on the first time information, a terminal device to execute switching from a first state to a second state, where the first time information is related to a first time period and/or a second time period, the first time period is a time period from a current instant to a start instant at which the terminal device enters network non-coverage, and the second time period is a duration of the network non-coverage.

According to a fifth aspect, a communications apparatus is provided, including a memory and a processor, where the memory is configured to store a program, and the processor is configured to invoke the program in the memory to execute a method according to the first aspect or the second aspect.

According to a sixth aspect, an apparatus is provided, including a processor, where the processor is configured to invoke a program from a memory to execute a method according to the first aspect or the second aspect.

According to a seventh aspect, a chip is provided, including a processor, where the processor is configured to invoke a program from a memory, so that a device on which the chip is installed executes a method according to the first aspect or the second aspect.

According to an eighth aspect, a computer-readable storage medium is provided, where the computer-readable storage medium stores a program, and the program causes a computer to execute a method according to the first aspect or the second aspect.

According to a ninth aspect, a computer program product is provided, including a program, where the program causes a computer to execute a method according to the first aspect or the second aspect.

According to a tenth aspect, a computer program is provided, where the computer program causes a computer to execute a method according to the first aspect or the second aspect.

In embodiments of the present application, a terminal device may determine first time information, and execute, based on the first time information, switching from a first state to a second state. The first time information includes a first time period from a current instant at which the terminal device is in network coverage to an instant at which the terminal device enters network non-coverage, and a second time period during which the network non-coverage lasts. It may be learned that, in a case of discontinuous network coverage, the terminal device may predict time information of the network non-coverage and perform state switching, to better reduce power consumption.

### BRIEF DESCRIPTION OF THE DRAWINGS

FIG. 1 is a wireless communications system to which embodiments of the present application are applied.
FIG. 2 is an NTN system to which embodiments of the present application are applied.
FIG. 3 is another NTN system to which embodiments of the present application are applied.
FIG. 4 is a schematic diagram of a possible scenario in which a terminal device is in discontinuous coverage.
FIG. 5 is a schematic diagram of a power saving configuration introduced into an internet of things.
FIG. 6 is a schematic diagram of another power saving configuration introduced into an internet of things.
FIG. 7 is a schematic flowchart of a method for wireless communication according to an embodiment of the present application.
FIG. 8 is a schematic flowchart of a possible implementation of the method shown in FIG. 7.
FIG. 9 is a schematic flowchart of another method for wireless communication according to an embodiment of the present application.
FIG. 10 is a schematic diagram of a possible configuration manner of a first configuration parameter.
FIG. 11 is a schematic diagram of another possible configuration manner of a first configuration parameter.
FIG. 12 is a schematic diagram of still another possible configuration manner of a first configuration parameter.
FIG. 13 is a schematic diagram of yet another possible configuration manner of a first configuration parameter.
FIG. 14 is a schematic flowchart of a possible implementation of the method shown in FIG. 9.
FIG. 15 is a schematic flowchart of another possible implementation of the method shown in FIG. 9.
FIG. 16 is a schematic structural diagram of an apparatus for wireless communication according to an embodiment of the present application.
FIG. 17 is a schematic structural diagram of another apparatus for wireless communication according to an embodiment of the present application.
FIG. 18 is a schematic structural diagram of a communications apparatus according to an embodiment of the present application.

### DETAILED DESCRIPTION OF THE EMBODIMENTS

The following describes the technical solutions in embodiments of the present application with reference to the accompanying drawings in embodiments of the present application. Apparently, the described embodiments are some rather than all of embodiments of the present application. For embodiments of the present application, all other embodiments obtained by a person of ordinary skill in the art without creative efforts fall within the protection scope of the present application.

Embodiments of the present application may be applied to various communications systems. For example, embodiments of the present application may be applied to a global system for mobile communications (global system of mobile communication, GSM), a code division multiple access (code division multiple access, CDMA) system, a wideband code division multiple access (wideband code division multiple access, WCDMA) system, general packet radio service (general packet radio service, GPRS), a long-term evolution (long term evolution, LTE) system, an advanced long-term evolution (advanced long term evolution, LTE-A) system, a new radio (new radio, NR) system, an evolution system of an NR system, an LTE-based access to unlicensed spectrum (LTE-based access to unlicensed spectrum, LTE-U) system, an NR-based access to unlicensed spectrum (NR-based access to unlicensed spectrum, NR-U) system, an NTN system, a universal mobile telecommunications system (universal mobile telecommunication system, UMTS), a wireless local area network (wireless local area networks, WLAN), wireless fidelity (wireless fidelity, WiFi), and a 5th-generation (5th-generation, 5G) system. Embodiments of the present application may be further applied to another communications system, such as a future communications system. The future communications system may be, for example, a 6th-generation (6th-generation, 6G) mobile communications system, or a satellite (satellite) communications system.

A quantity of connections supported by a conventional communications system is limited, and is also easy to implement. However, with development of communications technologies, a communications system may support not only conventional cellular communications but also one or more other types of communications. For example, the communications system may support one or more of the following communications: device-to-device (device to device, D2D) communications, machine to machine (machine to machine, M2M) communications, machine type communication (machine type communication, MTC), enhanced machine type communication (enhanced MTC, eMTC), vehicle to vehicle (vehicle to vehicle, V2V) communications, vehicle to everything (vehicle to everything, V2X) communications, or the like. Embodiments of the present application may also be applied to a communications system that supports the foregoing communication manners.

The communications system in embodiments of the present application may be applied to a carrier aggregation (carrier aggregation, CA) scenario, a dual connectivity (dual connectivity, DC) scenario, or a standalone (standalone, SA) networking scenario.

The communications system in embodiments of the present application may be applied to an unlicensed spectrum. The unlicensed spectrum may also be considered as a shared spectrum. Alternatively, the communications system in embodiments of the present application may be applied to a licensed spectrum. The licensed spectrum may also be considered as a dedicated spectrum.

Embodiments of the present application may be applied to an NTN system. As an example, the NTN system may be a 4G-based NTN system, an NR-based NTN system, or an IoT-based NTN system or an NTN system based on a narrow band internet of things (narrow band internet of things, NB-IoT).

The communications system may include one or more terminal devices. The terminal device mentioned in embodiments of the present application may also be referred to as a user equipment (user equipment, UE), an access terminal, a subscriber unit, a subscriber station, a mobile site, a mobile station (mobile station, MS), a mobile terminal (mobile Terminal, MT), a remote station, a remote terminal, a mobile device, a user terminal, a terminal, a wireless communications device, a user agent, a user apparatus, or the like.

In some embodiments, the terminal device may be a station (STATION, ST) in the WLAN. In some embodiments, the terminal device may be a cellular phone, a cordless phone, a session initiation protocol (session initiation protocol, SIP) phone, a wireless local loop (wireless local loop, WLL) station, a personal digital assistant (personal digital assistant, PDA) device, a handheld device with a wireless communication function, a computing device, or another processing device connected to a wireless modem, a vehicle-mounted device, a wearable device, a terminal device in a next-generation communications system (such as an NR system), a terminal device in a future evolved public land mobile network (public land mobile network, PLMN), or the like.

In some embodiments, the terminal device may refer to a device that provides a user with voice and/or data connectivity. For example, the terminal device may be a handheld device, a vehicle-mounted device, or the like that has a wireless connection function. In some specific examples, the terminal device may be a mobile phone (mobile phone), a Pad (Pad), a notebook computer, a laptop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like.

In some embodiments, the terminal device may be deployed on land. For example, the terminal device may be deployed indoors or outdoors. In some embodiments, the terminal device may be deployed on a surface, such as on a ship. In some embodiments, the terminal device may be deployed in the air, such as on an aircraft, a balloon, or a satellite.

In addition to the terminal device, the communications system may further include one or more network devices. The network device in embodiments of the present application may be a device for communicating with a terminal device, and the network device may also be referred to as an access network device or a radio access network device. The network device may be, for example, a base station. The network device in embodiments of the present application may refer to a radio access network (radio access network, RAN) node (or device) that connects the terminal device to a wireless network. The base station may broadly cover various names in the following, or may be replaced with the following names: a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a master eNodeB MeNB, a secondary eNodeB SeNB, a multistandard radio (MSR) node, a home base station, a network controller, an access node, a wireless node, an access point (access point, AP), a transmission node, a transceiver node, a base band unit (base band unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), a positioning node, or the like. The base station may be a macro base station, a micro base station, a relay node, a donor node, or the like, or a combination thereof. Alternatively, the base station may be a communications module, a modem, or a chip disposed in the device or apparatus described above. Alternatively, the base station may be a mobile switching center, a device that functions as a base station in D2D, V2X, or M2M communications, a network-side device in a 6G network, a device that functions as a base station in a future communications system, or the like. The base station may support networks of a same access technology or different access technologies. A specific technology and a specific device form used by the network device are not limited in embodiments of the present application.

The base station may be fixed or mobile. For example, a helicopter or an unmanned aerial vehicle may be configured to serve as a mobile base station, and one or more cells may move according to a location of the mobile base station. In other examples, a helicopter or an unmanned aerial vehicle may be configured to function as a device in communication with another base station.

In some deployments, the network device in embodiments of the present application may be a CU or a DU, or the network device includes a CU and a DU. A gNB may further include an AAU.

By way of example rather than limitation, in embodiments of the present application, the network device may have a mobility characteristic. For example, the network device may be a mobile device. In some embodiments of the present application, the network device may be a satellite or a balloon station. In some embodiments of the present application, the network device may alternatively be a base station located on land, water, or the like.

In embodiments of the present application, the network device may provide a service for a cell. The terminal device communicates with the network device by using a transmission resource (for example, a frequency resource or a spectrum resource) used by the cell. The cell may be a cell corresponding to the network device (for example, a base station). The cell may belong to a macro station or may belong to a base station corresponding to a small cell (small cell). The small cell herein may include a metro cell (metro cell), a micro cell (micro cell), a pico cell (pico cell), a femto cell (femto cell), or the like. These small cells have characteristics of a small coverage range and low transmit power, and are suitable for providing a high-rate data transmission service.

In a communications system, a PLMN may include a group of base stations, a RAN, and a core network (core network, CN). A base station is responsible for wireless communication with a terminal device, the RAN is responsible for transmitting a signal to the core network, and the core network is responsible for processing and forwarding communication data.

In some embodiments, generally the PLMN is selected in the following sequence: a registered public land mobile network (registered public land mobile network, RPLMN), a home public land mobile network (home public land mobile network, HPLMN), a user controlled public land mobile network (user controlled public land mobile network, UPLMN), and an operator controlled public land mobile network (operator controlled public land mobile network, OPLMN). An RPLMN is a PLMN with which a terminal device registers before last time when the terminal device is powered off or goes offline, and is temporarily saved in a universal subscriber identity module (universal subscriber identity module, USIM) card. An operator corresponding to an HPLMN may have different number ranges. The HPLMN is a PLMN of an international mobile subscriber identity (international mobile subscriber identity, IMSI) corresponding to a user USIM. A UPLMN is a list of PLMNs controlled by a user. Both the list of PLMNs and a corresponding access technology (access technology, ACT) are stored in two dedicated files of a USIM card or a subscriber identity module (subscriber identity module, SIM) card. A terminal device should be able to identify and read these files in the USIM card or the SIM card, thereby performing a PLMN selection operation. Otherwise, the operation cannot be performed. When an operator personizes a card, a PLMN with which the operator has signed a roaming agreement is written into a USIM card as an OPLMN, and is recommended to a user of the operator for network selection. A forbidden PLMN (forbidden PLMN, FPLMN) is generally determined after a terminal device attempts to access a PLMN but the access is rejected. The terminal device adds the rejecting PLMN to a list of FPLMNs.

In an NB-IoT, a non-access stratum (non-access stratum, NAS) generally selects a PLMN with a highest priority. A terminal device preferentially searches the specified PLMN. If the terminal device finds a cell of the specified PLMN, the terminal device immediately initiates camping or registration. If the terminal device cannot find the specified PLMN, the terminal device searches for all cells, finds a PLMN with a second highest priority, and attempts camping or registration.

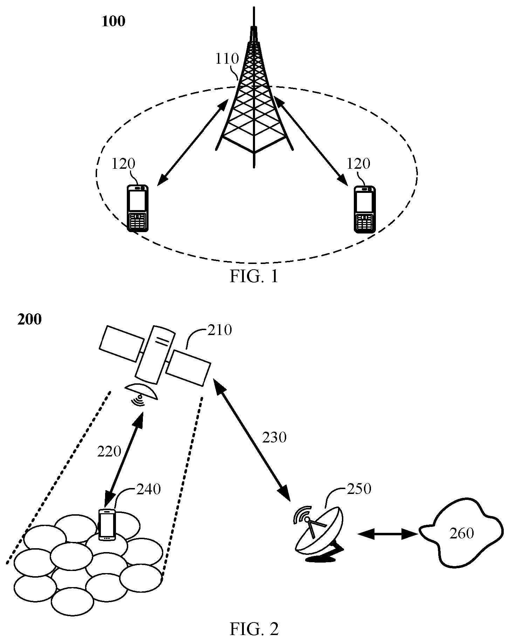

Exemplarily, FIG. 1 is a schematic diagram of an architecture of a communications system according to an embodiment of the present application. As shown in FIG. 1, the communications system 100 may include a network device 110, and the network device 110 may be a device that communicates with a terminal device 120 (or referred to as a communications terminal or a terminal). The network device 110 may provide communication coverage for a specific geographical area, and may communicate with a terminal device located in the coverage area.

FIG. 1 exemplarily shows one network device and two terminal devices. In some embodiments of the present application, the communications system 100 may include a plurality of network devices, and another quantity of terminal devices may be included within a coverage range of each network device. This is not limited herein.

Exemplarily, FIG. 2 is a schematic diagram of an architecture of the NTN system mentioned above. An NTN system 200 shown in FIG. 2 uses a satellite 210 as an air platform. As shown in FIG. 2, a satellite radio access network includes a satellite 210, a service link 220, a feeder link 230, a terminal device 240, a gateway (gateway, GW) 250, and a network 260 including a base station and a core network.

The satellite 210 is a spacecraft based on a space platform. The service link 220 refers to a link between the satellite 210 and the terminal device 240. The feeder link 230 refers to a link between the gateway 250 and the satellite 210. The Earth-based gateway 250 connects the satellite 210 to a base station or a core network, which specifically depends on a choice of the NTN architecture.

The NTN architecture shown in FIG. 2 is a bent-pipe transponder architecture. In this architecture, the base station is located on the Earth behind the gateway 250, and the satellite 210 serves as a relay. The satellite 210 operates as a repeater for forwarding a signal of the feeder link 230 to the service link 220, or forwards a signal of the service link 220 to the feeder link 230. That is, the satellite 210 does not have a function of a base station, and communication between the terminal device 240 and the base station in the network 260 need to be forwarded by the satellite 210.

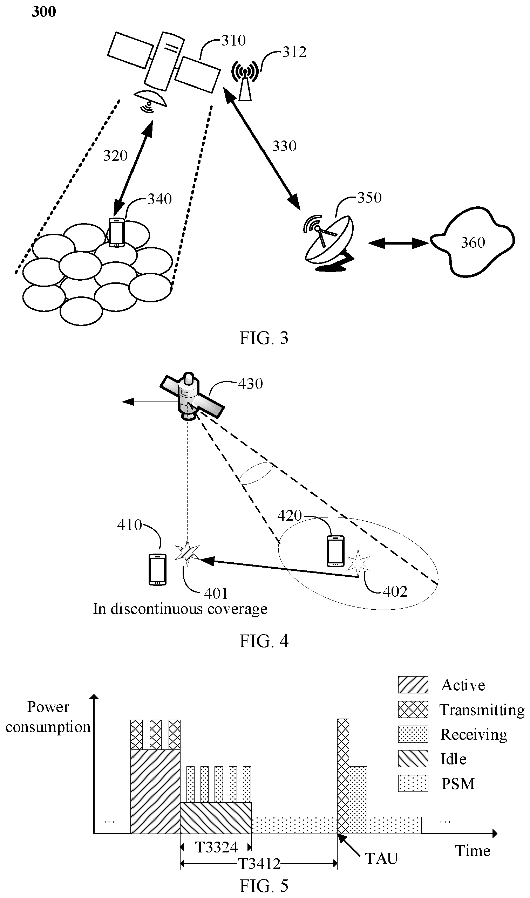

Exemplarily, FIG. 3 is a schematic diagram of another architecture of an NTN system. As shown in FIG. 3, a satellite radio access network 300 includes a satellite 310, a service link 320, a feeder link 330, a terminal device 340, a gateway 350, and a network 360. Different from that in FIG. 2, a base station 312 is provided on the satellite 310, and the network 360 behind the gateway 350 includes only a core network. Because the base station is deployed on the satellite, a PLMN includes only a core network part.

The NTN architecture shown in FIG. 3 is a regenerative transponder architecture. In this architecture, the satellite 310 carries the base station 312, and may be directly connected to the Earth-based core network through a link. The satellite 310 has a function of a base station, and the terminal device 340 may directly communicate with the satellite 310. Therefore, the satellite 310 may be referred to as a network device.

The communications system with the architecture shown in FIG. 2 or FIG. 3 may include a plurality of network devices, and another quantity of terminal devices may be included within a coverage range of each network device. This is not limited in embodiments of the present application.

In embodiments of the present application, the communications system shown in FIG. 1 to FIG. 3 may further include another network entity such as a mobility management entity (mobility management entity, MME) or an access and mobility management function (access and mobility management function, AMF). This is not limited in embodiments of the present application.

It should be understood that, in embodiments of the present application, a device that has a communication function in a network or system may be referred to as a communications device. The communications system 100 shown in FIG. 1 is used as an example. The communications device may include a network device 110 and a terminal device 120 that have a communication function. The network device 110 and the terminal device 120 may be specific devices described above. Details are not described herein again. The communications device may further include another device in the communications system 100, such as a network controller or a mobility management entity, which is not limited in embodiments of the present application.

For ease of understanding, some relevant technical knowledge related to embodiments of the present application is first described. The following related technologies, as optional solutions, may be randomly combined with the technical solutions of embodiments of the present application, all of which fall within the protection scope of embodiments of the present application. Embodiments of the present application include at least a part of the following content.

With the development of communications technologies, communications systems (for example, 5G) will integrate market potential of satellites and terrestrial network infrastructures. For example, a 5G standard makes an NTN, including a satellite segment, a part of a recognized 3rd generation partnership project (3rd generation partnership project, 3GPP) 5G connection infrastructure.

An NTN is a network or network segment that uses a radio frequency (radio frequency, RF) resource on a satellite or an unmanned aerial system (unmanned aerial system, UAS) platform. A satellite is used as an example. According to different orbital altitudes, communications satellites are classified into a low earth orbit (low earth orbit, LEO) satellite, a medium earth orbit (medium earth orbit, MEO) satellite, a geostationary earth orbit (geostationary earth orbit, GEO) satellite, a high elliptical orbit (high elliptical orbit, HEO) satellite, and the like. The LEO is an Earth-centered orbit with a height of 2000 km or less or at least 11.25 periods per day, and eccentricity is less than 0.25. Most artificial objects in outer space are located on a LEO. The LEO satellite orbits around the Earth at a high speed (mobile), but on a predictable or definite orbit.

Satellites with different orbital altitudes have different orbital periods. Exemplarily, a typical height of a LEO is 250-1500 km, and an orbital period is 90-120 minutes. A typical height of a MEO is 5000-25000 km, and an orbital period is 3-15 hours. A height of a GEO is about 35786 km, and an orbital period is 24 hours.

It may be learned from FIG. 2 and FIG. 3 in which a satellite is used as an example, a typical scenario in which a terminal device accesses an NTN system relates to an NTN transparent payload (payload) or an NTN regenerative payload. The bent-pipe transponder architecture shown in FIG. 2 corresponds to an NTN transparent payload, and the regenerative transponder architecture shown in FIG. 3 corresponds to an NTN regenerative payload.

In an NTN system, a communications device may infer, by using an ephemeris and an epoch time (epoch time) of a satellite, a trajectory of a cell of the satellite that may provide a service. The ephemeris of the satellite includes information such as a location and a speed of the satellite at a specific epoch time. The epoch time is a reference time point of an orbital parameter of the satellite. The ephemeris further includes parameters of the satellite such as a semi-major axis, eccentricity, an inclination angle, and a longitude of an ascending node.

In some embodiments, a terminal device may resolve an orbit of the satellite by using the ephemeris and the epoch time of the satellite. For example, the terminal device may resolve an orbital parameter of the satellite according to Kepler's laws. Further, a location of the satellite at a future time point may be predicted by using the orbital parameter and time information. For another example, considering motion of the satellite in the orbit and rotation of the Earth, a parameter of the satellite may be calculated by using a mathematical model.

As an example, for an elliptical orbit of a satellite, when a semi-major axis is *α*, eccentricity is e, an inclination angle is i, a longitude of an ascending node is Ω, a perigee parameter is ω, and a mean anomaly is M, a mean anomaly corresponding to a time t may be represented as *M*(*t*) *= M*₀ + *n* * (*t - t*₀).

Herein, M(t) is a mean anomaly of the satellite, M₀ is a mean anomaly corresponding to an epoch time t₀, and n is a mean angular velocity.

An eccentric anomaly E may be obtained by resolving a Kepler equation: *E* - *e* * *sin*(*E*) *= M*(*t*).

The eccentric anomaly E may be converted to a true anomaly v according to the following formula: $tan \left(ν/2\right) = sqrt \left(\frac{1 + e}{1 - e}\right) ∗ tan \left(\frac{E}{2}\right)$.

After the true anomaly is determined, a location of the satellite in the orbit may be calculated by using an orbital parameter. That is, the location of the satellite is represented by an orbital equation of the satellite. A distance r between the satellite and the geocenter may be calculated according to the following formula: *r* = *α* * (1 - *e*²)/(1 *+ e* * *cos*(*v*)).

Further, a location (x,y,z) of the satellite in a rectangular coordinate system is calculated using an orbital parameter and the true anomaly:
$x = r ∗ \left(cos\left(Ω\right)∗cos\left(ω+ν\right)-sin\left(Ω\right)∗sin\left(ω+ν\right)∗cos\left(i\right)\right) ;$
$y = r ∗ \left(sin\left(Ω\right)∗cos\left(ω+ν\right)+cos\left(Ω\right)∗sin\left(ω+ν\right)∗cos\left(i\right)\right) ;$
$z = r ∗ sin \left(i\right) ∗ sin \left(ω+ν\right) .$

In an NTN system, a plurality of satellites may form a satellite constellation to provide a service for a terminal device in an NTN cell. A time in which a satellite corresponding to an earth mobile cell may provide a service is shorter than a time in which a satellite corresponding to an earth fixed cell may provide a service. In the earth mobile cell, a coverage time of the satellite depends on a footprint size of the satellite. The footprint size of the satellite is related to an orbital height of the satellite. For example, a beam of a LEO satellite may reach 1000 km and a maximum coverage time of the LEO satellite is approximately 130s.

However, even during operation of the satellite constellation, a terrestrial terminal device may still be in a scenario of network non-coverage. That is, under coverage of the NTN network, the terminal device may be in a service with discontinuous coverage (discontinuous coverage) of a network. The following describes examples of the scenario of discontinuous coverage .

In some embodiments, due to a limited quantity of satellites in an orbit, a network service may have discontinuous coverage for a terrestrial terminal device. For example, for an earth mobile cell based on an internet of things, there may be no satellite providing a service for a terminal device at a specific instant. That is, a network that provides a service for the internet of things device provides discontinuous coverage.

In some embodiments, even if a terminal device is located within a geographic coverage area of a satellite, the terminal device may not be included in a beam (beam) coverage range of the satellite. In this scenario, the terminal device may also be in an area with discontinuous coverage. For ease of understanding, the following describes an example of a mobile cell with reference to a scenario of discontinuous coverage shown in FIG. 4.

In an NTN system shown in FIG. 4, both a terminal device 410 and a terminal device 420 are located in a geographical coverage area of a satellite 430. The terminal device 410 is located near a location 401 at which the satellite 430 is perpendicular to the ground, and the terminal device 420 is located near a location 402. It may be learned from FIG. 4 that a beam center at an epoch time t (beam center at apoch time) of emission of the satellite 430 corresponds to the location 402 on the ground, and the satellite 430 may provide a service for the terminal device 420. However, because the beam center is not perpendicular to the projection location 401 of the satellite 430 on the ground, the satellite 430 cannot provide a service for the terminal device 410. Therefore, the terminal device 410 is in a scenario of discontinuous coverage.

The foregoing analyzes a reason for discontinuous coverage of an NTN network by using an internet of things as an example. Applications of internet of things and MTC are experiencing exponential growth and are expected to play a key role in future networks and systems. In these systems, a terminal device transmits data less frequently, and may not always maintain communication with a network device. To save power, a network side may configure a plurality of power saving modes for the terminal device.

Exemplarily, an NB-IoT may support three power saving modes, which are respectively a power saving mode (power saving mode, PSM) mode, a discontinuous reception (discontinuous reception, DRX) mode, and an extended discontinuous reception (extended DRX) mode. In the PSM mode, it is unnecessary to receive paging (paging) by the terminal to detect whether there is a downlink service. Compared with that in the DRX mode, the terminal device in the eDRX mode has a longer paging detection period.

Further, the PSM mode and the eDRX mode are used in the NB-IoT to reduce power consumption of the terminal device. Exemplarily, whether the terminal device uses PSM or eDRX depends on a capability of the terminal device and a network-side configuration. In terms of capabilities, a capability that is not supported by the terminal device is not configured by the network. In terms of configurations, for a capability that is supported by a terminal device, different configurations may be made by different networks.

The following describes a working process of a power saving mode by using the PSM mode as an example. A terminal device that supports the PSM mode enters a PSM state after an idle (idle) state lasts for a period of time. In the PSM state, a power amplifier (power amplifier, PA) of the terminal device stops working. That is, a radio frequency part of the terminal device stops working. In addition, an access stratum (access stratum, AS) of the terminal device stops some related functions, to reduce power consumption of parts such as radio frequency and signalling processing, thereby achieving a purpose of low power consumption.

On the other hand, because the radio frequency part of the terminal device stops working, the terminal device cannot receive any paging or scheduling. For a network side, the terminal device is in an unreachable state in this case. In the unreachable state, data and short messages cannot reach the terminal device. However, the terminal device is still marked as registered (registered) in a network. Therefore, after being woken up from the PSM state (the unreachable state), the terminal device does not need to re-establish a public data network (public data network, PDN) connection, but can directly transmit data.

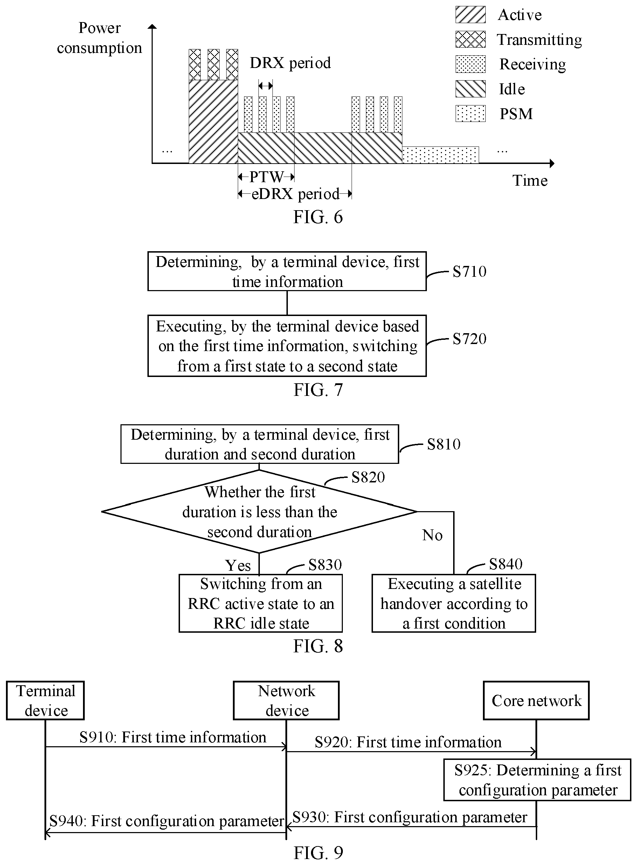

In the PSM mode, state switching of the terminal device may be implemented by using two timers. The two timers are respectively a T3324 timer and a T3412 timer. For ease of understanding, with reference to FIG. 5 and FIG. 6, the following describes examples of different power saving modes. In FIG. 5 and FIG. 6, a horizontal axis indicates time, and a vertical axis indicates power consumption.

It may be learned from FIG. 5 that a terminal device may transmit data with relatively high power consumption in an active (active) state, and mainly receives data with relatively low power consumption in an idle state. After the idle state lasts for a period of time, if the terminal device does not enter the active state again, the terminal device directly enters a PSM state with lower power consumption. The time period during which the terminal device is in the idle state is duration of a T3324 timer.

Continuing to refer to FIG. 5, a complete tracking area update (tracking area update, TAU) period is a sum of an idle time and a PSM time. Duration of one TAU period is defined as duration of a T3412 timer. Therefore, T3412 is TAU duration, and T3324 is a timer used for entering the PSM state from the idle state.

In some specific access point networks (access point network, APN), a terminal device may modify a T3412 timer and a T3324 timer by using a standard instruction specified in a 3rd generation partnership project (3rd generation partnership project, 3GPP) protocol.

As an example, in an NB-IoT, a terminal device may perform communication and configuration with an NB-IoT module by using an attention (attention, AT) command (ATCommands). An AT command is transmitted from a terminal device or a data terminal to a terminal adapter (terminal adapter) or a data circuit terminal. The terminal device controls a function of a mobile station by transmitting an AT command, and performs interaction based on various network services. The terminal device may transmit the command to a narrow band (narrow band, NB) module. The module may add the AT command into a confirmable (confirmable, CON) or non-confirmable (non-confirmable, NON) message transmitted to an NB-IoT platform.

As an example, a terminal device may modify the T3412 timer and the T3324 timer by using an instruction AT+CPSMS. CPSMS represents control plane support for mobile terminated services (control plane support for mobile terminated services). The AT+CPSMS instruction may be used to set a PSM-related parameter. In NB-IoT communication, AT+CPSMS is an AT command used to control a PSM.

FIG. 6 schematically describes related parameters in an eDRX mode. In a conventional DRX mode, a minimum interval is 2.56s (DRX period). For an internet of things in which data is not transmitted frequently, this time interval is excessively short. To further reduce power consumption caused by paging monitoring, an enhanced discontinuous reception eDRX technology is introduced into an NB-IoT. In each eDRX period, there is one paging time window (paging time window, PTW). Within the PTW, a terminal device monitors and responds to a paging message issued by a network side.

It should be noted that the terminal device can only monitor a paging channel within the PTW according to a DRX period, to receive a downlink service. Because the DRX period is relatively short, a terminal may be considered as not sleeping and always reachable within the PTW. Outside the PTW, the terminal is in a sleep state, does not monitor the paging channel, and cannot receive the downlink service. Therefore, the PTW window is a state of eDRX. Once the PTW window expires, the device enters a silent state and cannot receive paging until a next periodic PTW.

It may be learned from FIG. 6 that the terminal device in an idle state monitors paging intermittently according to an eDRX period, thereby reducing power consumption. Specifically, after one PTW, the terminal device enters the silent state. After the eDRX period elapses, the terminal device enters a PTW again and monitors paging. When paging falls outside the PTW, the terminal device cannot respond to the paging, but need to wait until paging cached on the network side is delivered again and falls within the PTW. Then, the terminal device successfully responds to the paging. It may be learned that a sleep time of the terminal device in the eDRX mode is relatively long.

In a communication process, the network side (a core network) may configure parameters of various power saving modes for the terminal device. Exemplarily, the network side may configure an eDRX-related parameter for the terminal device via an AMF or an MME.

As an example, the terminal device may first negotiate with the MME to obtain eDRX specific to the terminal device, and then obtain a hyper-system frame number (hyper-system frame number, H-SFN) of a paging message by calculating a paging hyper-frame (paging hyper-frame, PH). Then, the terminal device may obtain, through calculation of a paging time window (paging time window, PTW), a possible system frame number (system frame number, SFN) range in which the paging message is located. The PTW is specific to the terminal device, and may be determined by the PH, a start position (PTW_start) within the PH, and an end position (PTW_end) within the PH. Finally, the terminal device may obtain, by using a paging frame (paging frame, PF) and a paging occasion (paging occasion, PO), a subframe in which the paging message is located.

In addition, the core network may also configure a proper eDRX period for the terminal device. The position of the PH, PTW_start, and PTW_end are mainly determined by the eDRX period, a length of the PTW, and an identity (identity, ID) of the terminal device. Exemplarily, the PH, PTW_start, and PTW_end may be determined based on the following formula:
$H - SFN mod TeDRX , H = \left(UE_ID_H mod TeDRX,H\right) .$

Herein, UE_ID_H is determined based on the following manner: if a paging radio network temporary identifier (paging radio network temporary identifier, P-RNTI) is monitored on a physical downlink control channel (physical downlink control channel, PDCCH) or an MTC physical downlink control channel (MTC PDCCH, MPDCCH), the ID is 10 most significant bits of a hash function; or if a P-RNTI is monitored on a narrow band physical downlink control channel (narrow band PDCCH, NPDCCH), the ID is 12 most significant bits of a hash function.

TeDRX,H is an eDRX period of the terminal device in a hyper-frame. Generally, TeDRX,H = 1,2,...,256 hyper-frames. For an NB-IoT, TeDRX,H = 2,...,1024 hyper-frames. TeDRX,H is configured by an upper layer. One hyper-frame = Time of 1024 SFNs, that is, 10.24s. Therefore, a time range of the eDRX period may be 20.48s to 2.9127 hours.

PTW_start represents a first radio frame of the PH. PTW_start is an SFN that meets the following equation:
$SFN = 256 * ieDRX , where ieDRX = floor \left(UE_ID_H/TeDRX,H\right) mod 4 .$

PTW_end is a last radio frame of the PTW. PTW_end is an SFN that meets the following equation:
$SFN = \left(PTW_start+L*100-1\right) mod 1024 ,$ where L is a paging time window length (in seconds) configured by the upper layer.

The foregoing describes a plurality of power saving modes and related parameters of the eDRX mode with reference to FIG. 5 and FIG. 6. It may be learned from FIG. 5 and FIG. 6 that power consumption of the terminal device in the idle state or the PSM state is relatively low, thereby implementing power saving.

It may be learned from the foregoing that a scenario of discontinuous network coverage may occur under coverage of an NTN. When an internet of things and MTC are covered by the NTN, a time window of network non-coverage may mismatch a window in which the terminal device is in an unreachable state, which affects power saving and communication quality. Therefore, in a case of discontinuous coverage, how a terminal device on an internet of things works is a problem worth studying.

In addition, it may be learned from the foregoing that DRX, eDRX, and PSM configurations of the terminal device are configured by the core network for the terminal device. However, when the terminal device is in the NTN, receiving a signal from a base station by using a satellite belongs to a process of an access network. The core network may not know a coverage situation of the access network, and therefore does not actively consider configuring, for the terminal device, an eDRX configuration and a PSM configuration that match a communication scenario of discontinuous coverage of satellite signals. This is also a problem worth studying.

Exemplarily, when the terminal device attempts to establish a connection with the satellite, a remaining time of coverage of the satellite may be excessively short, so that the connection establishment cannot be completed. Exemplarily, when the terminal device is about to lose network coverage, the terminal device may be in a woken-up state or an idle state, and power consumed by the terminal device in attempting to transmit data or receive paging may be wasted. Therefore, for a terminal device in an internet of things application or an MTC application, it is necessary to consider a scenario of discontinuous coverage, to better reduce power consumption and ensure communication quality.

It should be noted that the foregoing problem that a power saving configuration of an internet of things may be affected by discontinuous coverage of an NTN system is merely an example. Embodiments of the present application may be applied to any type of scenario in which a related configuration of a terminal device is affected due to discontinuous network coverage.

Based on this, embodiments of the present application provide a method for wireless communication. By using this method, a terminal device may predict first time information for entering network non-coverage, to execute, based on the first time information, switching between different states, thereby reducing power consumption or successfully establishing communication with a satellite. For ease of understanding, the following describes in detail the method provided in embodiments of the present application with reference to FIG. 7.

Referring to FIG. 7, in step S710, a terminal device determines first time information.

The terminal device is any type of terminal device described above, which is not limited herein.

In some embodiments, the terminal device is a device that communicates by using a satellite in an NTN system. Exemplarily, when a base station is deployed on the satellite, the terminal device directly communicates with the base station on the satellite. Exemplarily, when the satellite serves as a relay, the terminal device communicates with a terrestrial network device by using the satellite.

As an example, the terminal device is located in a service area of a first satellite in the NTN at a current instant. The current instant may be an instant at which the terminal device is in any state. Exemplarily, the terminal device may be in an RRC active state at the current instant. Exemplarily, the terminal device may be in an RRC idle state at the current instant. Exemplarily, the terminal device may be in a PSM state at the current instant.

The first satellite may be a satellite that provides a service for the terminal device at the current instant, that is, a current satellite. That is, at the current instant, the terminal device has established a connection with the first satellite, or the terminal device is allowed to establish a connection with the first satellite. Exemplarily, the terminal device is located in a geographical coverage area of the first satellite. Exemplarily, the terminal device is located in a signal coverage area of the first satellite at the current instant.

As an example, the terminal device is in a scenario of network coverage at the current instant.

In some embodiments, the terminal device is a communications device with a relatively low service transmission rate or a relatively small amount of data transmission. For example, the terminal device is a communications device in an NB-IoT. For another example, the terminal device is a communications device in an MTC application.

In some embodiments, the terminal device is a device that supports power saving or a low power consumption configuration. That is, the terminal device may implement power saving during running by using a parameter configured by a network device or a core network. For example, the terminal device has a capability of supporting a DRX configuration or an eDRX configuration. For another example, the terminal device has a capability of supporting a PSM configuration.

The first time information refers to a time parameter related to a scenario in which the terminal device is in discontinuous network coverage. In some embodiments, the first time information refers to a parameter related to a time when the terminal device enters a scenario of network non-coverage from a scenario of network coverage. In some embodiments, the first time information refers to a parameter related to a time when the terminal device enters a scenario of network coverage from a scenario of network non-coverage.

As an example, that the terminal device enters a scenario of network non-coverage may also indicate that the terminal device is in a scenario of discontinuous network coverage. Discontinuous network coverage may also be referred to as discontinuous cell coverage. That is, the terminal device is in a coverage range of the cell at some instants, and may not be in a coverage range of any cell at some other instants.

As an example, when the terminal device is in coverage of a cell, the cell may indicate, by using a system information block (system information block, SIB), whether discontinuous coverage is supported, and provide necessary information for predicting discontinuous coverage.

In some embodiments, the first time information includes a time in which the terminal device may be outside network coverage, and therefore may also be referred to as out-of-coverage indication information. In some embodiments, the first time information may be used by the terminal device to release an RRC connection, and therefore may also be referred to as release auxiliary information. In some embodiments, the first time information is related to an unreachable state of the terminal device, and therefore may also be referred to as unreachability information.

The first time information is related to a first time period and/or a second time period. As an example, the first time information may include the first time period and/or the second time period. As an example, the first time information may be used to determine the first time period and/or the second time period.

As an example, the first time period or the second time period may include one or more time parameters of the time period. These time parameters may include a start time (start instant), an end time (end instant), and duration of the time period.

As an example, the first time information may include at least one of the following: duration (a time length) of network non-coverage, a time (instant) of entering the network non-coverage, or a time (instant) of returning to network coverage.

In some embodiments, the first time information may indicate a time parameter of the first time period. The first time period is a time period from the current instant to a start instant at which the terminal device enters the network non-coverage. That is, after the first time period elapses, the terminal device loses network coverage. If the terminal device can predict a time at which coverage is lost, the terminal device may check whether a remaining time of coverage of a current cell is long enough for connection establishment, thereby ensuring that the terminal device can successfully establish communication with a network device. In addition, the terminal device that is about to lose coverage may be prepared in advance, to further reduce power consumption.

As an example, the first time period may indicate a start instant at which the terminal device leaves a coverage range of satellite signals. The start instant is a critical time at which the terminal device is located on an edge of coverage of satellite signals. The start instant is a start instant at which the terminal device enters the network non-coverage.

As an example, the first time period is a time period in which the terminal device arrives at an edge of the current cell.

As an example, the terminal device is handed over to another serving cell before arriving at the edge of the current cell, and the first time period is a time period in which the terminal device arrives, from a current location, at an edge of another cell on which no cell handover is to be performed.

As an example, the terminal device does not perform a satellite handover before arriving at the edge of the current cell, and the first time period is a time period in which the terminal device arrives at the edge of the current cell from the current location.

In some embodiments, the first time information may indicate a time parameter of the second time period. The second time period is a duration of the network non-coverage. That is, after the second time period elapses, the terminal device enters a scenario of network coverage. The second time period may also be referred to as a non-coverage gap or a time period of unavailability. If the terminal device can determine the duration of the network non-coverage, the terminal device may be woken up according to the duration in a timely manner when entering network coverage, to ensure communication.

As an example, a start instant of the second time period is a start instant at which the terminal device enters the network non-coverage. An end instant of the second time period is an instant at which the terminal device enters network coverage from the network non-coverage.

In some embodiments, because a satellite constellation runs periodically, the first time period and the second time period in which the terminal device enters a scenario of network non-coverage are also periodic. After entering the network non-coverage, the terminal device may enter a network unreachable state such as a PSM state. Therefore, a first periodicity of waking up the terminal device may be determined based on the first time period and the second time period that periodically appear.

As an example, the first periodicity may be used to determine an occasion for waking up the terminal device from a sleep state, a silent state, or a PSM state.

As an example, it may be determined, based on the first time period and the second time period, an entry time at which the terminal device enters the coverage range of satellite signals again. According to the entry time, the terminal device may transmit, to a core network or a network device, a configuration interval of request information for waking up the terminal device, that is, determine the first periodicity of waking up the terminal device in recommendation information.

In some embodiments, the first time information may indicate the time parameter of the first time period and the time parameter of the second time period. The terminal device may determine, based on the first time information, duration of network coverage and duration of network non-coverage in discontinuous coverage, to recommend a reasonable configuration parameter to a network device or a core network to match a scenario of discontinuous coverage.

As an example, the terminal device may determine, based on the first time information, the recommended configuration parameter, that is, the recommendation information.

The terminal device may determine the first time information based on a plurality of types of information. The terminal device may predict, based on this time, when discontinuous coverage begins, to determine when to release an RRC connection to prevent triggering of a radio link failure (radio link failure, RLF). Further, the terminal device may synchronize the first time information with a network device, to release the terminal device to an RRC idle state (RRC_IDLE) in a timely manner.

In some embodiments, the terminal device may perform prediction based on one or more types of information, to determine the first time information. The one or more types of information may also be referred to as necessary information for predicting discontinuous coverage. Exemplarily, the first time information may be related to one or more of the following information: location information of the terminal device; relative location information between the terminal device and the first satellite; or relevant information of a plurality of satellites related to the terminal device. The plurality of satellites include a first satellite.

As an example, the first time information may be determined based on one or more of the foregoing information.

In some embodiments, the terminal device may estimate the first time information according to the location information of the terminal device. The location information of the terminal device may be determined based on a global navigation satellite system (global navigation satellite system, GNSS). Exemplarily, the location information of the terminal device may include location change information of the terminal device. The location change information is, for example, motion information of the terminal device.

As an example, when the terminal device is currently in the RRC active state, an edge change of a serving cell may be determined based on communication between the terminal device and a satellite. The terminal device may estimate, according to the location information of the terminal device, a time at which the terminal device arrives at an edge of the cell, to determine the first time period.

In some embodiments, the first time information may be determined based on the relative location information between the terminal device and the first satellite. The relative location information may include an elevation angle of the terminal device relative to the first satellite, and/or a distance between the terminal device and an edge of a service area of the first satellite.

As an example, in a case of discontinuous coverage of an IoT NTN, a value of the elevation angle of the terminal device relative to the first satellite or a change rate of the elevation angle may be used by the terminal device to determine whether it is about to enter discontinuous coverage. For example, when the elevation angle of the terminal device relative to the first satellite is less than 5 degrees, the terminal device may determine that the terminal device will leave the service area of the first satellite soon.

As an example, the terminal device may determine, based on the distance between the terminal device and the edge of the service area, whether the terminal device is about to leave a coverage range of the first satellite. For example, when a distance between the terminal device and a reference location at the edge of the cell is less than a set value, the terminal device will enter discontinuous coverage soon.

In some embodiments, the first time information may be related to the location information of the terminal device and ephemeris information or location information of the first satellite. Exemplarily, the terminal device may acquire the ephemeris information of the first satellite according to an ephemeris. The terminal device may determine, based on a location of the terminal device and the ephemeris information, remaining time in which the terminal device is in the coverage range of the first satellite, to determine the first time information based on the duration. Based on the first time information, the terminal device may determine duration in which the terminal device may be woken up in the recommendation information.

As an example, a network may provide a cell outage time for a terrestrial fixed cell served by a non-geostationary orbit (non-geostationary orbit, NGSO) satellite. Optionally, the terminal device may estimate, according to a service time (T-service) of a service, a time at which the terminal device arrives at the edge of the cell. Optionally, the terminal device may estimate a satellite parameter according to GNSS positioning information, and estimate the first time information.

As an example, in a case of a mobile cell, the network cannot provide an outage time. Therefore, the terminal device may predict duration of a service provided for the cell based on a reference location of the first satellite in broadcasting. For example, the terminal device may predict a time of the service provided for the cell according to the foregoing formula for calculating a satellite location (x,y,z).

In some embodiments, the first time information may be determined based on the relevant information of the plurality of satellites related to the terminal device. The plurality of satellites related to the terminal device may refer to satellites that currently provide or are about to provide a service for the terminal device. Exemplarily, the plurality of satellites include the first satellite that currently provides a service for the terminal device. Exemplarily, the plurality of satellites further include one or more satellites other than the first satellite. The one or more satellites may be any one or more satellites that may be about to provide a service for the terminal device.

As an example, the plurality of satellites may be some or all of satellites in a satellite constellation related to the terminal device.

As an example, in a mobile cell, a serving cell is generally an area in which one or more satellites provide a service. The serving cell may be a serving cell in which the terminal device is located. The plurality of satellites may include a satellite that provides a service for the serving cell.

In some embodiments, the relevant information of the plurality of satellites may include at least one of ephemeris information of the plurality of satellites, location information of the plurality of satellites, beam information of the plurality of satellites, or time information of providing services for the terminal device by the plurality of satellites. Because the plurality of satellites include the first satellite, the relevant information of the plurality of satellites also includes relevant information of the first satellite.

In some embodiments, the relevant information of the plurality of satellites may be carried in a SIB. A network device may transmit the SIB through broadcasting, so that the terminal device receives the relevant information of the plurality of satellites. For example, the network device may indicate support for discontinuous coverage by broadcasting an SIB32 or another information block of information about the first satellite (for example, an ephemeris and beam information). The following provides descriptions by using an SIB32 as an example.

As an example, the relevant information of the plurality of satellites may be carried in one or more of the following information: an SIB3, an SIB31, or an SIB32.

As an example, the relevant information of the first satellite may be carried in auxiliary information. When the terminal device is located in an NTN network, the auxiliary information may include information related to network coverage of the satellite, such as ephemeris information of the satellite. The terminal device may predict, according to the auxiliary information, whether the terminal device is about to lose the network coverage of the satellite, or whether the terminal device is in the network coverage of the satellite, to determine related time information of losing the network coverage.

As an example, relevant information of satellites other than the first satellite in the plurality of satellites may be transmitted by using RRC signalling. For example, after receiving the first time information, the first satellite may notify, by using RRC dedicated signalling, the terminal device of information indicating whether there is another mobile satellite around the terminal device. If there is another satellite, the first satellite further notifies the terminal device of an ephemeris parameter of the another satellite.

Optionally, the first time information may be determined based on the ephemeris information or the location information of the plurality of satellites. The ephemeris information of the plurality of satellites may be used to determine the location information of the plurality of satellites. For example, location information of a satellite may be determined based on an ephemeris and an epoch time.

As an example, when the relevant information of the plurality of satellites includes the location information of the plurality of satellites, the terminal device may estimate a trajectory of a serving cell on the Earth by predicting the location information.

As an example, by obtaining the location information of the plurality of satellites or location information of any satellite in the plurality of satellites, a trajectory of a satellite at different times may be depicted. The terminal device may predict, according to a trajectory parameter, a time for entering satellite coverage and a time for leaving satellite coverage.

As an example, the terminal device may predict, by using an ephemeris parameter of another mobile satellite around the terminal device that is transmitted by the first satellite, a time at which the another satellite is about to cover the terminal device and a time point at which the terminal device leaves coverage of a current serving satellite (the first satellite).

As an example, an orbit of any satellite in the plurality of satellites may vary slightly. To ensure accuracy of prediction, the terminal device may periodically update a prediction result.

Optionally, the first time information may be determined based on beam information of a satellite, to more accurately predict remaining time of the terminal device within a coverage range of the satellite. For a scenario of a mobile cell, if the terminal device performs prediction according to only ephemeris information of a satellite, a relatively large deviation may occur. For example, since the beam center of the satellite in FIG. 4 is not perpendicular to a location of the satellite, merely an ephemeris may be insufficient for the terminal device to determine whether the terminal device will be within a coverage range of the satellite at a given time. That is, discontinuous coverage predicted according to only ephemeris information may be incorrect. To improve accuracy, necessary information for predicting discontinuous coverage may include the ephemeris information and the beam information of the plurality of satellites.

As an example, when an SIB includes beam information of any satellite in the plurality of satellites, it may indicate that a cell supports discontinuous coverage. That is, information in the SIB may implicitly indicate whether the cell indicates discontinuous coverage. For example, when an SIB32 includes beam information of a serving satellite, the SIB32 may indicate that a cell of the serving satellite supports discontinuous coverage. Based on beam information in an SIB, the terminal device may relatively accurately predict how long the terminal device may stay within the coverage range of the first satellite. With reference to the location information of the terminal device and the location information of the satellite, the terminal device may roughly know when to enter discontinuous coverage. For another example, when the SIB32 does not include the beam information, it indicates that discontinuous coverage is not supported.

As an example, when the SIB includes beam information of any satellite in the plurality of satellites, the terminal device transmits the first time information.

Optionally, the first time information may be determined based on time information of providing services for the terminal device by the plurality of satellites. The time information of providing services for the terminal device by the plurality of satellites may be determined based on the ephemeris information and the beam information of the plurality of satellites. Exemplarily, durations of providing services by the plurality of satellites may be used to determine the first time period and/or the second time period.

As an example, a first duration is remaining time in which the first satellite provides a service. That is, the first duration is a duration between the current instant and an instant at which the terminal device leaves the service area of the first satellite, and second duration indicates information about time in which the other satellites cover the terminal device. The other satellites may have a plurality of start instants of covering the terminal device. There is a plurality of durations between the current instant and the plurality of start instants, and a least value of the plurality of durations is the second duration. That is, the second duration is a shortest duration among one or more durations between the current instant and one or more instants at which one or more satellites start to provide a service for the terminal device. The first time period may be determined based on the first duration and the second duration.

For example, when the first duration is greater than or equal to the second duration, duration of the first time period is greater than the first duration.

For another example, when the first duration is less than the second duration, duration of the first time period is equal to the first duration.

For another example, when the terminal device does not perform a satellite handover before leaving the service area of the first satellite, duration of the first time period is the first duration.

The first time information may be carried in a plurality of types of information. Optionally, the first time information may be carried in one or more of the following information: auxiliary information of the terminal device, a downlink channel quality report (downlink channel quality report, DCQR), or an access stratum release assistance indication (access stratum release assistance indication, AS RAI).

In some embodiments, the terminal device may report the first time information to the first satellite by using RRC dedicated signalling. The RRC dedicated signalling may include the auxiliary information of the terminal device.

In some embodiments, the first time information may be carried in a newly added information field. For example, an information field for transmitting the first time information may be added based on a DCQR. For another example, a corresponding information field may be added based on an AS RAI to transmit the first time information.

As an example, the terminal device may transmit an AS RAI command that carries the first time information to an NB module. The AS RAI is carried in a CON or NON message transmitted by the module to an NB-IoT, thereby implementing transmitting of the first time information.

Continuing to refer to FIG. 7, in step S720, the terminal device executes, based on the first time information, switching from a first state to a second state.

The first state may be a state of the terminal device at the current instant, or may be a state of the terminal device at another instant, which is not limited herein.

The second state may be any state different from the first state. In some embodiments, the first state and the second state may be any two of an RRC active state, an RRC idle state, and a PSM state. That is, the state switching executed by the terminal device may include switching between any two of the RRC active state, the RRC idle state, and the PSM state.

As an example, the first state is the RRC active state, and the second state is the RRC idle state.

As an example, the first state is the PSM state, and the second state is a wake-up state. The PSM state may also be referred to as an unreachable state.

As an example, the first state is the RRC idle state or the PSM state, and the second state is the RRC active state.

When the terminal device executes the switching from the first state to the second state, the terminal device may switch from the first state to the second state according to a switching occasion, or may determine whether to switch from the first state to the second state. That is, the terminal device may not execute the state switching.

The term "based on the first time information" may refer to that the terminal device directly executes the state switching according to the first time information, or may refer to that a network device transmits a switching indication based on the first time information, and the terminal device executes the state switching according to the switching indication transmitted by the network device. It may be learned from the foregoing that the first time information may indicate a time period in which the terminal device is unreachable. Both a network-centered process and a terminal-centered process may be used to determine and coordinate a time period in which the terminal device is unreachable. These two manners are not mutually exclusive, but may serve different cases and coexist in a same network. The following separately describes a terminal-centered state switching method embodiment and a network-centered state switching method embodiment.

In some embodiments, when the first state is the RRC idle state or the PSM state, the first time information may be used by the terminal device to determine whether to establish a connection. As an example, the first time information further includes a third time period in which a first serving cell provides a service for the terminal device, and a duration of the third time period is used by the terminal device to determine whether to establish an RRC connection with the first serving cell.

For example, when the first serving cell is a cell by which the first satellite currently provides a service, the third time period indicates remaining time in which the first satellite may provide a service for the terminal device. If the remaining time is insufficient to establish a connection, the terminal device may not establish a connection with the first satellite. If the remaining time is sufficient to establish a connection, in a case of a service requirement, the terminal device may establish an RRC connection with the first satellite, to ensure communication.

For another example, the first serving cell may be a cell by which another satellite provides a service when the terminal device is handed over to the another satellite. Similarly, the third time period may indicate remaining time in which the another satellite provides the service for the terminal device. Details are not described herein again.

As an example, when the terminal device is not handed over before arriving at an edge of a current serving cell, the third time period is the first time period.

As an example, when the duration of the third time period is less than or equal to a first threshold, the terminal device does not establish an RRC connection, to prevent a connection failure and reduce power consumption caused by connection establishment.

In a process of terminal-centered state switching, the terminal device may determine, based on a plurality of types of information, first time information related to network non-coverage, and transmit the first time information to a network device. Although the network device may have more accurate coverage data than the terminal device, the network device generally cannot know a location of the terminal device as accurately as the terminal device. In addition, in some cases in an NB IoT, the terminal device may not transmit a location report to the network device (for example, an eNB), which means that the terminal device estimates network non-coverage more accurately than the network device. Further, if the terminal device predicts the first time information, even if the terminal device loses a signal in an RRC connected state, it is unnecessary for the terminal device to experience an RLF declaration process with high power consumption because the terminal device knows that it is about to enter network non-coverage.

In some embodiments, after the terminal device determines the first time information, the terminal device may transmit the first time information to the network device. After receiving the first time information, the network device may transmit first indication information to the terminal device. The first indication information may indicate whether the terminal device switches from the first state to the second state, or may indicate a switching occasion for the terminal device to execute the state switching.

As an example, the first indication information includes a switching occasion for the terminal device to switch from the RRC active state to the RRC idle state. For example, the first indication information may indicate the switching occasion by configuring a switching timer for the terminal device, to prevent autonomous switching of the terminal device.

As an example, the terminal device notifies the network device of a time period in which the terminal device is unreachable and/or an indication (the first time information) that the terminal device leaves or enters a coverage area. Further, when the terminal device is in the RRC connected (RRC_CONNECTED) state, the network device or the terminal device may configure, by using a first timer, the terminal device to report the indication. The first timer is, for example, an out-of-coverage timer.

Exemplarily, a value of the first timer may be configured by the network device, or may be configured by the terminal device independently.

Exemplarily, when the value of the first timer is set to 0, the terminal device may immediately release an RRC connection and enter the RRC idle state.

Exemplarily, a new indication from an uplink dedicated control channel (uplink dedicated control channel, UL DCCH) message may be introduced into configuration or transmission of the first time information, or an existing AS RAI may be used.

As an example, when the terminal device transmits the first time information to the network device, the terminal device may start the first timer.

As an example, after the network device receives the first time information, the network device may also start the first timer.

As an example, after predicting a time at which discontinuous coverage starts, the terminal device may transmit the first time information to the network device. The terminal device or the network device may start the first timer. When the first timer expires, the terminal device may execute an action of leaving the RRC connection according to behavior of the network device, and enter the RRC idle state. A reason for the RRC releasing may be marked as "Others".

Exemplarily, when the first timer runs, the terminal device may transmit the first time information to the network device. Before leaving the service area of the first satellite, the network device still provides a service for the terminal device. Any uplink or downlink transmission between the terminal device and the network device may continue. In addition, in this period, the network device may further choose to re-configure the terminal device to disable or stop the first timer.

In some embodiments, the terminal device may autonomously enter the RRC idle state. Optionally, the terminal device may determine, based on the first timer, a switching occasion for performing state switching instead of determining the switching occasion based on an indication from the network device.

As an example, the first timer may be disposed on the terminal device. The terminal device may start the first timer when transmitting the first time information. When the first timer expires, the terminal device autonomously executes an action of leaving the RRC connection and enters the RRC idle state. Similarly, a reason for the RRC releasing may be marked as "Others".

As an example, when the terminal device releases the RRC connection based on the first timer, the reason for the RRC releasing may be marked as a new reason. When the terminal device is about to enter a scenario of network non-coverage, the network device may transmit an RRC release (RRCRelease) message to the terminal device with the new reason.

As an example, the first timer may be used by the terminal device to determine a switching occasion for switching from the RRC active state to the RRC idle state.

As an example, the terminal device may further transmit second indication information to the network device. The second indication information may indicate that the RRC idle state is a preferred state. The second indication information may be further used by the terminal device to determine, based on the first timer, a switching occasion for switching from the RRC active state to the RRC idle state. When the first timer expires, the terminal device may switch from the RRC active state to the RRC idle state. That is, if the first timer expires, the terminal device may directly perform state switching regardless of whether the terminal device receives the first indication information of the network device.

As an example, because the terminal device knows its coverage situation, when starting the first timer, the terminal device may indicate, to the network, that "RRC_IDLE" is the preferred RRC state. If the terminal device receives no RRC release indication when the first timer expires, the terminal device autonomously enters RRC_IDLE.

Regardless of whether the switching occasion is determined based on an indication from the network device or the terminal device autonomously determines the switching occasion, the switching occasion is related to one or more of the following information: a service type of the terminal device, a service priority of the terminal device, or downlink data of the network device. The following describes in detail a network-centered state switching process.

In some embodiments, when the terminal device determines that it is about to enter a scenario of network non-coverage, the first time information may also indicate that the terminal device is about to leave the RRC connection. The network device may determine, based on the information, that it is time to release the terminal device. Releasing the terminal device is to switch the terminal device from the RRC active state to the RRC idle state.

As an example, if the network device considers it necessary, the network device may prevent the terminal device from autonomously entering the idle state by releasing a timer configuration.

In some embodiments, the terminal device may autonomously release an existing RRC connection when predicting that a non-coverage gap arrives. If the terminal device does not have enough time to complete an RRC re-establishment process due to discontinuous coverage, the terminal device may determine, based on an RLF triggering situation, an occasion for switching to the RRC idle state. Exemplarily, when an actual time at which the terminal device enters network non-coverage is earlier than a time indicated by the first time information, the terminal device may enter a scenario of network non-coverage in advance. In this scenario, the terminal device may not know that it has entered the scenario of network non-coverage, but initiates an RRC re-establishment request due to loss of a signal, resulting in an RLF.

As an example, the terminal device may directly switch to the RRC idle state after the RLF is triggered. That is, when the terminal device predicts that it is about to enter the scenario of network non-coverage, the terminal device directly releases an RRC connection with a network (network, NW) once the RLF is triggered.

As an example, when a quantity of times that an RLF is triggered is greater than a threshold, the terminal device switches to the RRC idle state. For example, after an RLF is triggered for N times, the terminal device switches from the RRC active state to the RRC idle state, where N is a natural number greater than or equal to 1.

In some embodiments, to prevent a mismatch between RRC connection states, the terminal device may trigger an RRC connection release request before an actual RLF event occurs. By triggering the request, the terminal device may inform the network of the release of the RRC connection. This method may cause the RRC connection to be released earlier than the actual RLF, thereby affecting data transmission. To prevent earlier releasing, the terminal device may implicitly release the RRC connection on the RLF, that is, release the RRC connection when triggering the RLF. However, the network should know behavior of the terminal device, so that the network may determine, based on a data transmission state and a most recently reported radio condition, UE context that is to be locally released.

In some embodiments, when the terminal device knows that network non-coverage is about to start, and a remaining time in a current cell is insufficient to complete a new connection establishment process, a decision on whether to trigger re-establishment or enter the RRC idle state may also be completed based on an implementation of the terminal device.

The foregoing describes a terminal-centered state switching process, and the following describes a network-centered state switching process. In this process, the network device may detect a degree of activity of a service of the terminal device, to determine a switching occasion for the terminal device to perform state switching. It should be understood that the terminal device may independently determine the switching occasion for the state switching based on a service type, and details are not described herein again.

In some embodiments, the network device may be any type of base station described above or a network-side device other than a communications device corresponding to a core network. Exemplarily, when the base station is disposed on a satellite, the network device may refer to the satellite. Exemplarily, when the base station is disposed on the ground and the satellite is used only for relaying, the network device may include the satellite and the base station.

As an example, the network device includes the first satellite, and the terminal device is located in the service area of the first satellite at the current instant.

In a network-centered switching process, the terminal device maintains an RRC connection with the network device. The network device may learn of a service state of the terminal device according to communication with the terminal device, to instruct the terminal device in state switching. Further, the terminal device also transmits the first time information to the network device, to try to prevent a possible state mismatch between the terminal device and the network device.

In some embodiments, the network device may also determine the first time information in a manner such as detecting the degree of activity of the service of the terminal device. That is, the network device may receive the first time information transmitted by the terminal device, or may independently determine the first time information. The network device may instruct, based on the first time information, the terminal device to execute the switching from the first state to the second state.

In some embodiments, when the terminal device notifies the network device of the first time information about leaving the coverage area, the network device may determine whether to immediately make the terminal device release the RRC connection and enter the RRC idle state. That is, the network device may determine a switching occasion.

It may be learned from the foregoing that the switching occasion may be related to the service type of the terminal device, the service priority of the terminal device, and the downlink data of the network device.

As an example, the network device may set an active factor function related to the service type and/or the service priority of the terminal device, to determine the switching occasion. Exemplarily, the network device may detect a degree of activity of a service of a terminal device, and configure a switching occasion for a terminal device that supports DRX to switch state. Exemplarily, the active factor function may be a first factor δ(x,y). Herein, x may be related to the service type, y may be related to the service priority, and 0 < δ(x,y) ≤ 1.

As an example, the network device may configure a switching occasion according to a transmitting requirement of the downlink data, to prevent loss of the downlink data. Exemplarily, to prevent loss of transmitted downlink data, the network device may instruct the terminal device to enter the RRC idle state in advance. Because the network device knows an occasion for the terminal device to enter the idle state, if the network device still has downlink data to transmit, the network device may store and buffer the downlink data, and deliver the data when the terminal device is connected again. A case in which the terminal device is connected again is, for example, a new satellite covers the terminal device, or the terminal device is handed over to another satellite, or the terminal device receives a wake-up signal.

Exemplarily, a fourth time period between the switching occasion and the current instant is a product of the first time period and a second factor, and the second factor is greater than 0 and less than 1. The second factor is, for example, α. When the first time period is the first duration, the first time period may be represented as T1. The network device may instruct the terminal device to enter the RRC idle state after a time period of α*T1 (1 > α > 0).

It may be learned from FIG. 7 that, after predicting the first time information, the terminal device may execute state switching autonomously or according to an indication from the network device. Generally, the terminal device learns of coverage discontinuity when being in a connected mode. In this case, the terminal device may determine to release the RRC connection instead of triggering a re-establishment process, thereby reducing power consumption.

It may be learned from the foregoing that before the terminal device leaves the service area of the first satellite, the terminal device may receive ephemeris information and/or beam information of another satellite. The terminal device may determine whether to execute a satellite handover. The satellite handover may postpone the terminal device entering the network non-coverage. Further, the terminal device may perform state switching after executing the satellite handover. As an example, the terminal device may determine, based on the first duration and the second duration described above, whether to execute a satellite handover or state switching.

In some embodiments, the terminal device may determine, based on the relevant information of the plurality of satellites, an occasion for executing the state switching. The relevant information of the plurality of satellites may be used to determine the first duration and the second duration. For ease of understanding, with reference to FIG. 8, the following describes an example of a process in which a terminal device executes state switching based on a first duration and a second duration. The process includes a plurality of steps.

Step S1: Transmitting, by a network device, an ephemeris and beam information of a first satellite through broadcasting.

Step S2: Predicting, by the terminal device according to location information of the terminal device and broadcast information, the first duration in which the terminal device leaves the first satellite.

Step S3: Notifying, by the first satellite based on the first duration, an ephemeris parameter of one or more satellites around the terminal device by using RRC dedicated signalling.

Step S4: Predicting, by the terminal device according to the received ephemeris parameters of the one or more satellites, a plurality of durations from a current instant to start instants of coverage of these satellites. A shortest duration among the plurality of durations is the second duration. A satellite corresponding to the second duration is a second satellite. Further, the terminal device may further predict a time at which coverage of the one or more satellites leaves the terminal device, to determine duration of a first time period and duration of a second time period.

Step S5: Determining, by the terminal device based on a size relationship between the first duration and the second duration, how to cope with a scenario of network non-coverage.

Exemplarily, when the first duration is greater than or equal to the second duration, the terminal device executes, according to a first condition, a handover from the first satellite to the second satellite corresponding to the second duration; or when the first duration is less than the second duration, the terminal device switches from an RRC active state to an RRC idle state.

As an example, the first condition is related to a handover condition for the terminal device to execute a satellite handover and/or a service requirement of the terminal device. The handover condition for executing a satellite handover includes a factor that affects the handover, such as a signal measurement result.

As an example, if the first duration is greater than or equal to the second duration, first, the terminal device may be handed over from the first satellite (a source satellite) to the second satellite (a target satellite) when the handover condition is met. After the satellite handover succeeds, the terminal device may select, according to a current service state, whether to enter the RRC idle state in a service area of the second satellite.

As an example, if the first duration is greater than or equal to the second duration and the handover condition is not met, the first satellite may transmit a handover command to the terminal device, to reduce power consumption caused by the terminal device in always performing measurement and transmitting a measurement report. The terminal device may determine, based on the first condition, whether to execute a handover from the first satellite to the second satellite.

Exemplarily, the first condition may be whether the terminal device has a service requirement. If the terminal device has a service requirement, the terminal device executes the handover from the first satellite to the second satellite. If the terminal device does not have a service requirement, the terminal device may switch from the RRC active state to the RRC idle state. For example, the terminal device may send, to the network device, an indication of leaving an RRC connection, so that the network device considers that the terminal device may be released. Similarly, if it is required by a network, a timer configuration may be released to prevent the terminal device from autonomously entering the idle state.

As an example, if the first duration is less than the second duration, the terminal device may switch from the RRC active state to the RRC idle state autonomously or according to an indication from the network device. When the terminal device leaves or is about to leave coverage of the first satellite, the terminal device may transmit first time information to the network device based on prediction. This information is conductive to effective use of resources by the network device. If the network device does not expect transmission of uplink data or downlink data with the terminal device, the network device releases the terminal device to the RRC idle state.

The method in FIG. 8 is executed by a terminal device. In step S810, the terminal device determines first duration and second duration.

In step S820, the terminal device determines whether the first duration is less than the second duration. If the first duration is less than the second duration, the terminal device executes step S830; or if the first duration is not less than the second duration, the terminal device executes step S840.

In step S830, the terminal device switches from an RRC active state to an RRC idle state. The terminal device may execute this step autonomously or according to an indication.

In step S840, the terminal device executes a satellite handover according to a first condition.

With reference to FIG. 7 and FIG. 8, the foregoing separately describes a terminal-centered method embodiment of coping with discontinuous coverage and a network-centered method embodiment of coping with discontinuous coverage. By using the method embodiments, a terminal device may determine, based on first time information, an occasion for releasing an RRC connection or being woken up, to match a time of network non-coverage. This reduces power consumption or ensures a success rate of communication establishment in a case of discontinuous coverage.

It may be learned from the foregoing that a coverage situation of the terminal device is generally known by only the terminal device and an access network, and may not be known by a core network. However, in an internet of things application or an MTC application, it is necessary for a core network to configure a DRX period or an eDRX period of a terminal device in an idle state and configure a PSM state. Therefore, in a scenario of discontinuous coverage, how to properly match the coverage situation of a terminal device with a configuration of a core network may also be considered.

To resolve the foregoing problem, an embodiment of the present application proposes another method for wireless communication. By using this method, first time information determined by a terminal device may be used by a core network to determine a first configuration parameter, where the first configuration parameter is used to instruct the terminal device to perform state switching. It can be seen that, when performing configuration, the core network considers time information of network non-coverage, so that the core network may configure a more reasonable power saving mode.

For ease of understanding, the following specifically describes another method for wireless communication according to this embodiment of the present application with reference to FIG. 9. The method shown in FIG. 9 is associated with the method shown in FIG. 7. For brevity, the terms that have been explained in FIG. 7 are not described again.

FIG. 9 is described from a perspective of interaction between a terminal device, a network device, and a core network. The terminal device is located in a service area of a first satellite in an NTN at a current instant. A communications device corresponding to the core network may be a network element or an entity in the core network.

Exemplarily, the communications device corresponding to the core network may include an MME or an AMF. The AMF or the MME may determine a configuration parameter of a mode such as DRX, eDRX, or PSM when the terminal device is in an unreachable state.

Exemplarily, when a base station is deployed on a satellite, a terrestrial device includes only the core network. In this scenario, a PLMN is the core network.

Referring to FIG. 9, in step S910, the terminal device transmits first time information. The first time information is the first time information determined by the terminal device in FIG. 7. The first time information is related to a first time period and/or a second time period. Details are not described herein again. It should be understood that the second time period may be a time period in which network coverage does not exist or is unavailable, or may indicate a time period in which the terminal device is unreachable.

It may be learned from FIG. 9 that the terminal device transmits the first time information to the network device. In step S920, the network device forwards the first time information to the core network. Regardless of whether the base station is deployed on the first satellite, the network device includes the first satellite that receives the first time information.

In some embodiments, the base station is deployed on the first satellite, and the core network is deployed on the ground. The terminal device transmits the first time information to the base station on the first satellite, and the base station forwards the first time information to the core network on the ground.

In some embodiments, both the base station and the core network are located on the ground. The terminal device transmits the first time information to the first satellite, and the first satellite forwards the first time information to the base station or the core network on the ground. The communications device corresponding to the core network communicates with the terminal device by using the first satellite.

As an example, after the terminal device predicts or estimates the first time information, the terminal device may report a time parameter of the first time period and a time parameter of the second time period. After receiving the time parameters, the network device may transmit the time parameters to the AMF or the MME by using a NAS message.

As an example, the network device may also estimate or predict the first time information of the terminal device according to location information of the terminal device and information about another neighboring satellite around the terminal device.

In step S925, the core network determines a first configuration parameter.

In some embodiments, the first time information is used by the core network to determine the first configuration parameter of the terminal device. That is, the core network may determine, based on the first time information, a configuration parameter of the terminal device, that is, the first configuration parameter. When the core network configures an eDRX parameter and/or a PSM parameter for the terminal device according to the first time information, it may be ensured that the terminal device is woken up when being located in a coverage range of satellite signals, thereby successfully receiving a signal from the satellite. As an example, when the MME provides the terminal device with a timer (for example, a periodic TAU timer, eDRX mode configuration or PSM mode configuration), duration of a time period of unavailability (in which there is no network coverage or the terminal device is unreachable) related to the first time information and a time at which the time period of unavailability starts may be considered.

As an example, the core network may set a cache timer according to the second time period in the first time information. For example, after receiving the first time information, the PLMN may set a corresponding timer T2 according to the second time period predicted or estimated by the terminal device. During the timer T2, if needing to page the terminal device, the PLMN stores the information. After the second time period elapses, the PLMN delivers the data cached by the PLMN to the NTN network, and the NTN network forwards corresponding information to the terminal device.

As an example, duration of the cache timer is set to be greater than one or more DRX or eDRX periods, to prevent the network device from still paging the terminal device outside a coverage range of the satellite, thereby causing a waste of resources.

As an example, the core network may determine a first mode of the terminal device. A configuration parameter of the first mode is the first configuration parameter.

In some embodiments, the first mode is any one or more power saving modes configured by the core network for the terminal device, so that reasonable power saving configuration is performed in a case of discontinuous network coverage, thereby reducing power consumption of the terminal device.

The first mode may include one or more of the following: a DRX mode, an eDRX mode, or a PSM mode. As an example, the first mode may be any one of the foregoing three modes. As an example, the first mode may include the foregoing three modes or any two of the foregoing three modes. For example, in an internet of things, the first mode includes the eDRX mode and the PSM mode.

In some embodiments, the first mode may be determined based on a recommendation of the terminal device. Exemplarily, the terminal device may indicate a mode recommended by the terminal device in the first time information, or may add, into the first time information, parameter information of the recommended mode, that is, a first recommendation parameter. Exemplarily, the terminal device may transmit the first recommendation parameter after transmitting the first time information.

As an example, when the terminal device is in a communication scenario of discontinuous coverage of satellite signals, the terminal device may determine, based on the first time information, the DRX mode, the eDRX mode, and/or the PSM mode suitable for the terminal device. For example, when the second time period is relatively short, that is, when a time in which the satellite cannot cover the terminal device is relatively short, the DRX mode is applicable to the terminal device. For another example, when the second time period is relatively long, that is, when a time in which the satellite cannot cover the terminal device is relatively long, the eDRX mode is applicable to the terminal device. For another example, when the second time period is long, the PSM mode is applicable to the terminal device.

As an example, the terminal device may further determine, based on a service type, the DRX mode, the eDRX mode, and/or the PSM mode suitable for the terminal device. For example, when the service type of the terminal device requires relatively frequent data transmission, the DRX mode is applicable to the terminal device. For another example, when the service type of the terminal device requires a relatively long data transmission interval, the PSM mode is applicable to the terminal device.

In some embodiments, the first configuration parameter may alternatively be determined based on a recommendation parameter of the terminal device. For example, a PLMN network may determine the first configuration parameter based on the first recommendation parameter of the terminal device. It may be seen that the terminal device may negotiate with the core network about a proper configuration parameter (for example, a timer duration) for a related PSM or eDRX solution in a case of discontinuous network coverage.

Exemplarily, in a case of discontinuous coverage of an NTN, a mismatch between a PTW and a coverage window need to be resolved. A NAS layer between the terminal device and the core network may negotiate about a related parameter, to support discontinuous coverage. Exemplarily, the terminal device may negotiate with the core network about configurations of a plurality of types of timers, to ensure a mobility management function and power saving optimization of the terminal device.

As an example, the terminal device may report the recommended DRX, eDRX, PSM, or the like to the core network according to the service type of the terminal device, and may negotiate with the AMF or the MME to support discontinuous coverage. This recommendation may be considered by the MME when providing a timer for the terminal device. For example, the AMF or the MME may configure, for the terminal device, a TAU timer, a DRX mode, an eDRX mode, or a PSM mode with a variable periodicity.

As an example, the terminal device may determine the first recommendation parameter based on the first time information and the service type. The terminal device may forward the first recommendation parameter to the core network via the network device, so that the core network determines the first configuration parameter. When the core network determines the first configuration parameter based on the first recommendation parameter, it is conductive to ensuring that when the terminal device communicates based on a mode such as eDRX or PSM in a scenario of discontinuous coverage of satellite signals, the terminal device can have good communication quality, and power consumption of the terminal device is further reduced.

As an example, the first recommendation parameter includes a parameter related to the TAU, eDRX, PSM, or the like, that is recommended by the terminal device.

As an example, the terminal device may transmit a determined DRX, eDRX, and/or PSM configuration parameter that is applicable to a communication scenario of discontinuous coverage of satellite signals to the core network as reporting information. The core network may configure, for the terminal device, a DRX, eDRX, and/or PSM configuration that matches the communication scenario by referring to the DRX, eDRX, and/or PSM configuration parameter recommended by the terminal device.

As an example, when determining that an applicable mode is the DRX mode, the terminal device may determine a recommendation parameter of a DRX configuration suitable for the communication scenario. The first recommendation parameter may include the recommendation parameter of the DRX configuration, such as a TAU time parameter or a timer parameter.

As an example, when determining that an applicable mode is the eDRX mode, the terminal device may determine a recommendation parameter of an eDRX configuration suitable for the communication scenario. The first recommendation parameter may include the recommendation parameter of the eDRX configuration, such as an eDRX period.

As an example, when determining that an applicable mode is the PSM mode, the terminal device may determine a recommendation parameter of a PSM configuration suitable for the communication scenario. The first recommendation parameter may include the recommendation parameter of the PSM configuration, such as PSM duration. In an embodiment, the terminal device may recommend directly entering a PSM state in the communication scenario.

As an example, when the communication scenario determined by the terminal is applicable to both the eDRX mode and the PSM mode, recommendation parameters of an eDRX configuration and a PSM configuration suitable for the communication scenario may be determined. The first recommendation parameter may include these parameters.

In some embodiments, the first mode may alternatively be determined based on a capability of the terminal device. It may be learned from the foregoing that the core network may determine, based on the capability supported by the terminal device, the first mode corresponding to the terminal device. Details are not described herein again.

In some embodiments, the first mode may be determined based on any combination of the plurality of types of information described above.

In some embodiments, the first configuration parameter may include any one or more parameters related to the first mode, which is not limited herein. Exemplarily, the first configuration parameter includes a new TAU, eDRX, DRX, or PSM timer parameter. Exemplarily, the first configuration parameter may include parameters such as a period, a start time, an offset value, and duration of the first mode, and a timer configuration parameter. Exemplarily, the first configuration parameter may be used by the terminal device to execute the first mode.

As an example, the first configuration parameter may include a time parameter of a second timer and a time parameter of a third timer. The second timer is used to determine duration in which the terminal device is in a radio resource control RRC idle state. The second timer is, for example, a T3324 timer. The third timer is used to determine duration in which the terminal device is in a PSM state. The third timer is, for example, a T3412 timer. A start time of the second timer and a start time of the third timer may be an end instant of the first time period. That is, both timers are enabled when the first time period ends. Therefore, duration of the third timer is greater than duration of the second timer. For example, the duration of the third timer is a sum of the second timer and duration of the PSM state.

As an example, a setting of the second timer may be determined based on the first time period. For example, a start time of the second timer is the end instant of the first time period (a start instant of the second time period). For another example, the duration of the second timer may be dynamically adjusted according to duration of the first time period, to ensure that an unreachability time and a sleep state match the time in which the device is not covered by an NTN.

For example, the second timer starts at the end of the first time period. When the second timer expires, the terminal device immediately enters the PSM state.

As an example, when the terminal device directly enters a scenario of network non-coverage in an RRC active state, the duration of the second timer may be adaptively increased, which is conductive to matching between an existing power saving configuration and the scenario of network non-coverage.

As an example, the duration of the third timer may be determined based on the second time period, to ensure that an end time of the PSM state matches an end time of network non-coverage or unreachability of the device. This prevents the terminal device from being woken up when there is no network coverage. The second time period may refer to an entire time period predicted or estimated by the terminal device in which it cannot be covered by a network.

As an example, an end instant of the third timer is not earlier than an end instant of the second time period. That is, the end instant of the third timer may be the same as or later than the end instant of the second time period. When the end instant of the third timer is the end instant of the second time period, the end time of the PSM state may be an end point of unreachability or network non-coverage of the device. When the end instant of the third timer is later than the end instant of the second time period, the end time of the PSM state may be the same as an original end point.

As an example, when the end instant of the second time period is later than a start instant of one TAU period, the terminal device is always in the PSM state within the TAU period.

In some embodiments, the network device may receive the first time information from the terminal device. When the first time information indicates the first time period, the network device may instruct the terminal device to enter the RRC idle state after the first time period elapses. Alternatively, the terminal device may autonomously enter the RRC idle state according to the predicted duration of the first time period. Although the terminal device enters the RRC idle state, the terminal device cannot receive paging because the terminal device enters the scenario of network non-coverage after the first time period elapses. In this scenario, the duration of the second timer may be reduced, so that the terminal device quickly enters the PSM state. As a time in which the terminal device remains in the PSM state increases, power saving may be further implemented.

As an example, when the second timer is a T3324 timer and the third timer is a T3412 timer, a ratio of the duration of the second timer to the duration of the third timer is less than a first parameter. The first parameter may be A, where 0 < A < 0.5. For example, A is 0.25.

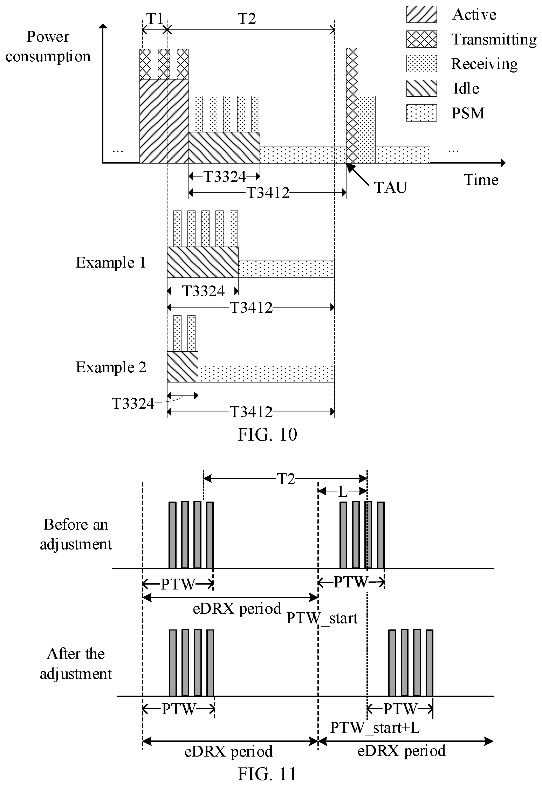

For ease of understanding, the following uses the T3324 timer and the T3412 timer in FIG. 5 as an example to describe configuration parameters of the timers with reference to the two examples in FIG. 10. The T3324 timer represents the second timer, and the T3412 timer represents the third timer. It should be noted that this is merely an example, and the second timer and the third timer may alternatively be other timers used to determine corresponding duration.

Referring to FIG. 10, T1 represents the first time period, and T2 represents the second time period. Compared with that in FIG. 5, in an example 1 and an example 2, start times of the T3324 timer and the T3412 timer are both advanced to the end instant of the first time period. Because the terminal device is in the RRC active state at the end instant of the first time period, the start times of the two timers are advanced from an original start instant in the idle state into a time period of the active state.

It may be learned from comparison between the example 1 and the example 2 that duration of the T3324 timer in the example 1 is far greater than duration of the T3324 timer in the example 2. Therefore, the example 2 may achieve further power saving.

In FIG. 10, an end time of the T3412 timer is the end instant of the second time period. It should be noted that the end time of the T3412 timer may alternatively be an original end point shown in the first drawing in FIG. 10.

In some embodiments, when the first mode is the eDRX mode, the first configuration parameter may include a configuration parameter of the eDRX mode. As an example, the first configuration parameter may determine a time parameter of a PTW in each eDRX period. The time parameter of the PTW may be replaced with an actual window of the PTW. The terminal device or the network device may calculate a window of the PTW according to period information transmitted by the core network, and adjust the calculated window, to determine the actual window of the PTW.

As an example, the time parameter of the PTW may be determined based on the calculated window of the PTW and the first time information. The calculated window of the PTW refers to a time window determined based on the foregoing formula for calculating the PH, PTW_start, and PTW_end. Generally, the eDRX period may overlap the second time period, and positions of the PH and PTW_start may be earlier than the end instant of the second time period. If the PH and PTW_start are determined based on only existing calculation, the terminal device may start monitoring the PTW during network non-coverage, resulting in unnecessary power consumption. To resolve this problem, when the calculated window of the PTW overlaps the second time period, the actual window of the PTW may be determined through adjustment.

As an example, the first configuration parameter may include various parameters for adjusting the calculated window of the PTW.

As an example, when a start position of the calculated window of the PTW is within the second time period, the terminal device skips the PTW or some of POs in the PTW. That the terminal device skips the PTW or the POs refers to: the terminal device does not detect paging in the PTW or the POs.

As an example, when the start position of the calculated window of the PTW is within the second time period, the network device skips the PTW or some of POs in the PTW. That the network device skips the PTW or the POs refers to: the network device does not page the terminal device in the PTW or the POs.

For example, if the PH and the start position of the PTW that are obtained through calculation are within the second time period, the terminal device (and the network) may skip the PH and the PTW, or at least skip some POs in an overlapping period between the second time period and the PTW. Considering that a maximum value of a PTW length is only four hyper-frames (for an NB-IoT), once the terminal device skips some or all of POs in a current PTW and remaining paging fails to be transmitted to the terminal device, the terminal device waits for a PTW of a next eDRX period.

As an example, when the start position of the calculated window of the PTW is within the second time period, a start position of the actual window of the PTW is a sum of the start position of the calculated window and a first offset value. The first offset value may be determined based on duration of an overlapping time period. That is, when the PTW in the eDRX period partially overlaps the second time period, the start position (PTW_start) of the PTW is adjusted, so that the start position of the PTW in the eDRX period is aligned with or after an end instant of network non-coverage.

The following provides exemplary descriptions with reference to FIG. 11. T2 represents the second time period. In FIG. 11, the terminal device and the core network may obtain, through calculation, an offset L (the first offset value) between the PTW, PTW_start, and the end instant of the second time period. The terminal device may clearly know duration of the second time period through prediction, and can also know an eDRX period, a position of a paging hyper-frame, and a related parameter of the PTW.

As shown in FIG. 11, a start position PTW_start of a calculated window of the PTW of the next eDRX period is delayed by the offset L, where L may be greater than the paging hyper-frame. That is, the start position of the actual window of the PTW is a position obtained by shifting backward the start position of the calculated window by L. Through adjustment, within this eDRX period, the PTW is completely within a time of network coverage, avoiding waste of resources to initiate paging on an unreachable terminal device, and ensuring that the terminal device does not lose important paging information. Therefore, the start position *PTW*_*start'* of the actual window of the PTW may be represented as:
$PTW _ start ′ = PTW _ start + L .$

For another example, the terminal device may adjust a related parameter of a PTW in each eDRX period, that is, the related parameter of the PTW in each eDRX period may be dynamically changed.

As an example, when an end position of the calculated window of the PTW is within the second time period, an end position of the actual window of the PTW is a difference between the end position of the calculated window and a second offset value. The second offset value may be determined based on duration of an overlapping time period. That is, when the PTW in the eDRX period partially overlaps the second time period, the end position (PTW_end) of the PTW is adjusted, so that the end position of the PTW in the eDRX period is aligned with or before a start instant of network non-coverage.

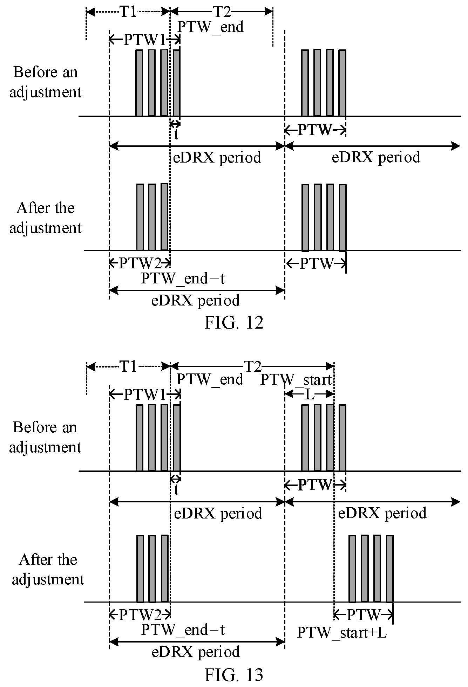

The following provides exemplary descriptions with reference to FIG. 12, where T1 represents the first time period, and T2 represents the second time period. In FIG. 12, when the terminal device need to enter the RRC idle state autonomously or according to a notification of the network device, the terminal device transmits the first time information. As described above, the terminal device may predict, by using the ephemeris parameter transmitted by the network device and the location information of the terminal device, the time at which the terminal device leaves network coverage. Further, after obtaining an ephemeris parameter of another satellite around the terminal device from the first satellite, the terminal device may predict a time of being covered by the another satellite again, to estimate a time period in which the terminal device has no network coverage, that is, the second time period. After obtaining the PTW and PTW_start through calculation, the terminal device and the core network may adjust PTW_end in the eDRX period with reference to a related eDRX parameter and the duration of the second time period.

As shown in FIG. 12, the terminal device estimates that it will enter the time of network non-coverage (the second time period) after a time period T1. In a first eDRX period, the second time period partially overlaps duration of the PTW. The terminal device may determine overlapping duration t (the second offset value) by using a parameter related to the PTW, to adjust PTW_end. Therefore, the end position *PTW*_*end'* of the actual window of the PTW may be represented as:
$PTW _ end ′ = PTW _ end - t .$

It may be learned from FIG. 12 that because the end position of the PTW is adjusted, duration of the calculated window PTW1 is different from that of the actual window PTW2.

As an example, when the calculated window of the PTW in the eDRX period overlaps an H-SFN of the end instant of the second time period, the terminal device may adjust the PH by using offset_PH, so that the PH is aligned with the H-SFN in which the end instant of the second time period is located.

It should be noted that, although the second time period is a parameter specific to the terminal device, end instants of second time periods of a plurality of terminal devices may be close. Therefore, to allocate PTW_start to different terminal devices (for example, allocate pending paging when coverage is restored), the core network may still need to configure different specific offsets for different terminal devices.

As an example, when the second time period overlaps calculated windows of PTWs in two adjacent eDRX periods, an end position of an actual window of a PTW in a first eDRX period is not later than the start instant of the second time period, and a start position of an actual window of a PTW in a second eDRX period is not earlier than the end instant of the second time period. Considering that a granularity of the second time period may be relatively large (for example, in minutes or hours), the second time period may overlap PTWs in the two adjacent eDRX periods.

The following provides exemplary descriptions with reference to FIG. 13. The terms that have been explained in FIG. 11 and FIG. 12 are not described again. As shown in FIG. 13, T2 partially overlaps PTWs in two eDRX periods. Overlapped duration of a PTW in a first eDRX period and the second time period is t, and an offset between PTW_start in a second eDRX period and the end instant of the second time period is L. Because an adjustment of PTW_start or PTW_end occurs in a corresponding eDRX period, both PTW_start and PTW_end are adjusted in FIG. 13, to prevent the terminal device from performing paging detection in the time of network non-coverage, thereby reducing power consumption.

In some embodiments, the first configuration parameter may include an eDRX period. The eDRX period may be dynamically adjusted according to a duration change of the second time period. It may be learned from the foregoing that discontinuous coverage may occur periodically. The eDRX period configured by the core network may be similar to a period of network non-coverage. Therefore, in a time period of network non-coverage, the terminal device is likely to miss the PTW or a part of the PTW each time, thereby affecting a paging effect. To resolve this problem, the eDRX period may be dynamically configured, and is consistent with the second time period. Optionally, the eDRX period may be dynamically configured according to a length change of the second time period.

As an example, the eDRX period is proportional to the duration of the second time period. If the second time period is relatively long, the eDRX period may be correspondingly configured to be relatively long; or if the second time period is relatively short, the eDRX period may be correspondingly configured to be relatively short.

Continuing to refer to FIG. 9, in step S930, the core network transmits the first configuration parameter to the network device. In step S940, the terminal device receives the first configuration parameter forwarded by the network device.

The first configuration parameter may be used by the terminal device to execute state switching. In some embodiments, the state switching executed by the terminal device may include switching between any two of the following three states: an RRC active state, an RRC idle state, or a PSM state.

It may be learned from FIG. 9 that the core network may determine the first configuration parameter based on the first time information and/or the first recommendation parameter of the terminal device, to try to prevent the terminal device from performing paging detection within the time of network non-coverage, and also try to prevent the network device from paging the terminal device within the time in which the terminal device is unreachable. This reduces power consumption of the terminal device and the network device.

It may be learned from the foregoing that the first time information may be determined based on the relevant information of the plurality of satellites related to the terminal device. Further, the relevant information of the plurality of satellites may be carried in one or more of the following information: an SIB3, an SIB31, or an SIB32. Based on the SIB3, the SIB31, and the SIB32, the terminal device may estimate whether a remaining coverage time of a cell or a satellite is relatively short.

In some embodiments, the SIB32 may include auxiliary information of a maximum of four satellites. Due to mobility and a service feature of the terminal device, some information in the SIB32 may not be related to the terminal device. For example, the SIB32 notifies that a satellite will arrive in the next six hours, but the terminal device does not expect to transmit data in the next eight hours. In this case, the terminal device may request information about expected coverage availability after eight hours, and the network device may provide such satellite auxiliary information in dedicated RRC.

In some embodiments, when the satellite information in the SIB32 is not related to the terminal device, the terminal device may request the network device to provide satellite auxiliary information. The satellite auxiliary information includes related information of a satellite that is not included in the current SIB.

As an example, the terminal device may request, by using dedicated RRC, the network to provide satellite auxiliary information. The dedicated RRC may include a satellite that does not belong to the SIB32 or another SIB currently.

In some embodiments, the terminal device may receive SIBs broadcast by different PLMNs. The broadcast SIBs may include an SIB3, an SIB31, an SIB32, and the like. Exemplarily, in an NTN system with discontinuous coverage, a terminal device may acquire a temporary parameter and a coverage parameter in currently or previously received SystemInformationBlockType32, SystemInformationBlockType31, or SystemInformationBlockType3. Based on the temporary parameter, the terminal device may determine whether it is out of radio signal coverage. That is, the terminal device may determine whether it is in a scenario of network non-coverage currently. If the terminal device is in a scenario of network non-coverage, in response, the terminal device may disable an access stratum function to reduce power consumption.

After the second time period elapses, how the terminal device works may also be considered.

In some embodiments, after the second time period elapses, the terminal device may receive data cached by the core network. For example, when the terminal device is not required to re-register with a PLMN network, the terminal device may receive data cached by the core network during a cache timer.

In some embodiments, after the second time period elapses, the terminal device may enter an automatic network selection mode. For example, when the terminal device is required to re-register with the PLMN network, the terminal device may enter the automatic network selection mode.

In some embodiments, when the terminal device is in a time of network non-coverage or unreachability, an AS layer of the terminal device has been disconnected, but a NAS layer still remains connected. In some scenarios, when the terminal device is in a PSM state in the second time period, the terminal device does not receive a paging message, but the terminal device is still registered with the network. When UE context maintained by an NTN network and the PLMN network is consistent with information obtained when the terminal device re-establishes an RRC connection, the terminal device may receive and transmit data without re-registering with the network after waking up from a sleep state. That is, although the terminal device is in an unreachable state, the terminal device is still registered with the initially selected PLMN network.

In some embodiments, the UE context maintained by the NTN network and the PLMN network may be inconsistent with the information obtained when the terminal device re-establishes an RRC connection, or the terminal device needs to re-select a PLMN network. In this scenario, the terminal device re-registers with the PLMN.

As an example, a procedure for re-registering with the PLMN is as follows: the terminal device primarily selects a PLMN with which the terminal device is most recently registered, secondly selects a PLMN service with a higher priority, thirdly selects a PLMN from a list of equivalent PLMNs (equivalent PLMN, EPLMN), and then attempts to register with the selected PLMN. It should be noted that the terminal device disables an access stratum due to discontinuous coverage, and therefore may postpone an attempt to obtain a service on a PLMN with a higher priority.

As an example, the terminal device may be set to the automatic network selection mode. In an automatic network selection mode of an NTN, an NB-IoT terminal device may select a PLMN according to a sequence of a visited PLMN (visited PLMN, VPLMN) and an HPLMN or an equivalent home PLMN (equivalent home PLMN, EHPLMN).

As an example, the terminal device may register with the VPLMN, and obtain a service on the VPLMN.

As an example, the terminal device may start a timer according to the configured automatic network selection mode, and make periodic attempts, to obtain a service on the HPLMN or the EHPLMN. When the access stratum of the terminal device is disabled due to discontinuous coverage in the NTN, behavior of periodically attempting to access the HPLMN or the EHPLMN with a higher priority may be re-defined.

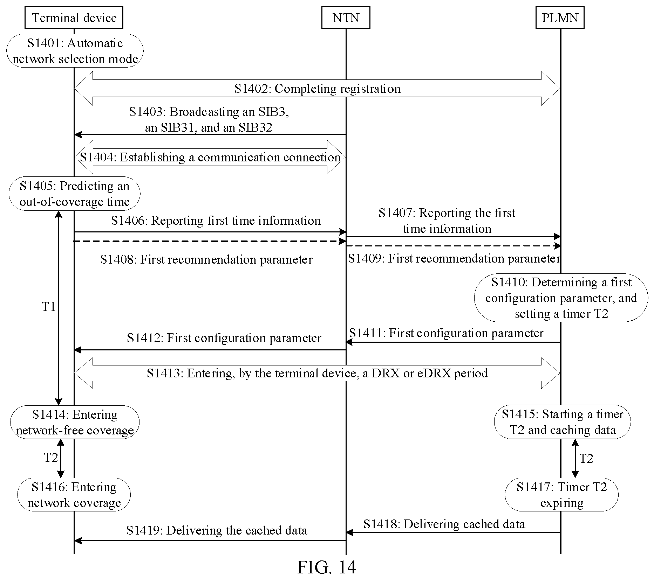

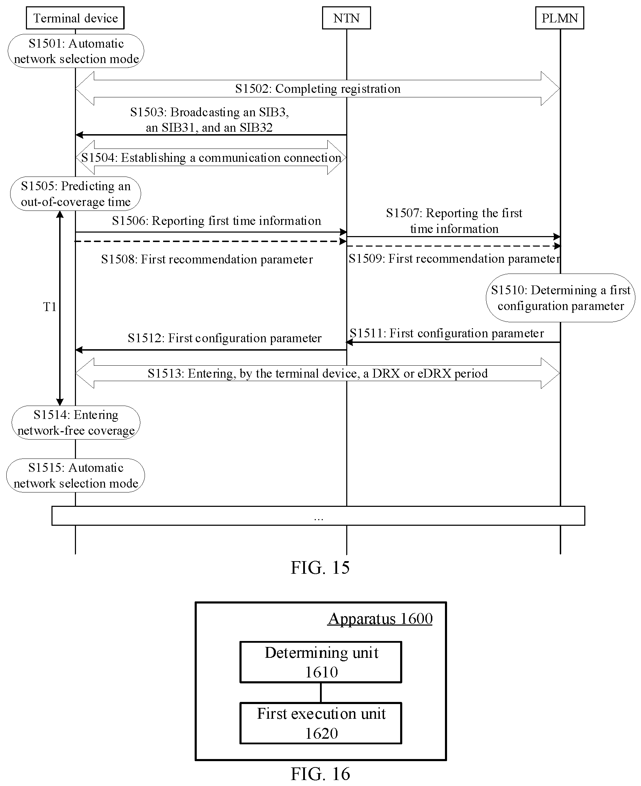

For ease of understanding, with reference to FIG. 14 and FIG. 15, the following describes a method for negotiating, by a terminal device and a PLMN, about a power saving configuration during network non-coverage by using an example in which a core network in an NTN system is a PLMN. Dotted lines in the figures represent possible embodiments.

FIG. 14 and FIG. 15 are both described from a perspective of interaction between a terminal device, an NTN, and a PLMN. In FIG. 14, the PLMN sets a timer T2 to cache to-be-delivered data. In FIG. 15, the PLMN does not set a timer.

Referring to FIG. 14, in step S1401, the terminal device enters an automatic network selection mode.

In step S1402, the terminal device completes registration with the PLMN. After successfully selecting the PLMN, the terminal device completes registration and performs a normal communication process.

In step S1403, the NTN system transmits an SIB3, an SIB31, and an SIB32 through broadcasting.

In step S1404, the terminal device establishes a communication connection with the NTN system. The terminal device may learn, according to the broadcasting, of an ephemeris parameter of a current satellite that covers the terminal device, ephemeris parameters of several adjacent satellites around the terminal device, and the like.

In step S1405, the terminal device predicts an out-of-coverage time. Information about the out-of-coverage time is a first time period and a second time period that are related to first time information. The terminal device may perform prediction or estimation according to current location information of the terminal device or the network device triggers the terminal device to perform prediction or estimation.

In step S1406, the terminal device reports the first time information to the NTN network. The terminal device may report coverage information by sending a dedicated RRC signalling message to the NTN network.

In step S1407, the NTN network reports the first time information to the PLMN network. The PLMN network may determine, based on the first time information, that the terminal device is about to leave a network coverage area after a time T1 elapses.

In step S1408, the terminal device reports a first recommendation parameter to the NTN network. The terminal device may report a recommended parameter of DRX, eDRX, PSM or the like to the core network according to a service type of the terminal device, to negotiate with an AMF or an MME about a configuration that supports discontinuous coverage.

In step S1409, the NTN network reports the first recommendation parameter to the PLMN network.

In step S1410, the PLMN network determines a first configuration parameter, and sets a timer T2. The PLMN network may update and set information about each DRX or eDRX period according to the first time information and the first recommendation parameter, and update information about timers such as T3324 and T3412. The timer T2 is a cache timer. The first configuration parameter may include configuration parameters such as a periodic TAU timer, DRX, eDRX, and PSM mode. For example, the AMF or the MME provides a timer configuration for the terminal device after comprehensive consideration.

In step S1411 and step S1412, the PLMN network transmits the first configuration parameter to the NTN network, and the NTN network transmits the first configuration parameter to the terminal device. The terminal device and the NTN network may calculate a PTW parameter in each eDRX period according to the information.

In step S1413, the terminal device enters a DRX or eDRX period.

In step S1414, the terminal device enters network non-coverage. In the first time period (T1), the terminal device enters an RRC idle state autonomously or according to an indication. After T1 elapses, the terminal device enters a scenario of network non-coverage according to a predicted time.

In step S1415, the PLMN network starts the timer T2 and caches data.

In step S1416, the terminal device enters a scenario of network coverage after the second time period (T2) elapses.

In step S1417, the PLMN network determines that the timer T2 expires.

In step S1418 and step S1419, the PLMN network delivers cached data to the NTN network, and the NTN network forwards the cached data to the terminal device.

Different from that in FIG. 14, the PLMN does not set the timer T2 in FIG. 15, and the terminal device re-registers with the PLMN after entering network non-coverage. For brevity, the procedures that have been explained in FIG. 14 are not described again in FIG. 15.

Referring to FIG. 15, step S1501 to step S1509 and step S1511 to step S1514 are not described again.

In step S1510, the PLMN network determines only the first configuration parameter, and does not set a timer. The first recommendation parameter of the terminal device may implement negotiation between the terminal device and the core network about a power saving configuration.

In step S1515, the terminal device enters the automatic network selection mode.

The foregoing describes the method embodiments of the present application in detail with reference to FIG. 1 to FIG. 15, and the following describes in detail the apparatus embodiments of the present application with reference to FIG. 16 to FIG. 18. It should be understood that the descriptions of the apparatus embodiments correspond to the descriptions of the method embodiments, and therefore, for parts that are not described in detail, refer to the foregoing method embodiments.

FIG. 16 is a schematic block diagram of an apparatus for wireless communication according to an embodiment of the present application. The apparatus 1600 may be any type of terminal device described above. The apparatus 1600 shown in FIG. 16 includes a determining unit 1610 and a first execution unit 1620.

The determining unit 1610 may be configured to determine first time information.

The first execution unit 1620 may be configured to execute, based on the first time information, switching from a first state to a second state, where the first time information is related to a first time period and/or a second time period, the first time period is a time period from a current instant to a start instant at which the terminal device enters network non-coverage, and the second time period is a duration of the network non-coverage.

Optionally, the first state is an RRC idle state or a PSM state, the first time information further includes a third time period in which a first serving cell provides a service for the terminal device, and a duration of the third time period is used by the terminal device to determine whether to establish an RRC connection with the first serving cell.

Optionally, the first state is an RRC active state, the second state is an RRC idle state, and the apparatus 1600 further includes a first transmitting unit, which may be configured to transmit the first time information to a network device; and a first receiving unit, which may be configured to receive first indication information transmitted by the network device, where the first indication information includes a switching occasion for the terminal device to switch from the RRC active state to the RRC idle state.

Optionally, the first state is an RRC active state, the second state is an RRC idle state, and the apparatus 1600 further includes a processing unit, which may be configured to start a first timer when the first time information is transmitted, where the first timer is used by the terminal device to determine a switching occasion for switching from the RRC active state to the RRC idle state.

Optionally, the apparatus 1600 further includes a second transmitting unit, which may be configured to transmit second indication information to a network device, where the second indication information indicates that the RRC idle state is a preferred state. The first execution unit 1620 is further configured to switch from the RRC active state to the RRC idle state when the first timer expires.

Optionally, the switching occasion is related to one or more of the following information: a service type of the terminal device, a service priority of the terminal device, or downlink data of the network device.

Optionally, the switching occasion is determined based on a first factor δ(x,y), where x is related to the service type, y is related to the service priority, and 0 < δ(x,y) ≤ 1.

Optionally, a fourth time period between the switching occasion and the current instant is a product of the first time period and a second factor, and the second factor is greater than 0 and less than 1.

Optionally, the first state is a PSM state, and the determining unit is further configured to determine, based on a first periodicity, an occasion for being woken up, where the first periodicity is determined based on the first time period and the second time period.

Optionally, the terminal device is located in a service area of a first satellite in an NTN at a current instant.

Optionally, the first time information is related to one or more of the following information: location information of the terminal device; relative location information between the terminal device and the first satellite; or relevant information of a plurality of satellites related to the terminal device, where the plurality of satellites include the first satellite, and the relevant information of the plurality of satellites includes at least one of ephemeris information of the plurality of satellites, location information of the plurality of satellites, beam information of the plurality of satellites, or time information of providing services for the terminal device by the plurality of satellites.

Optionally, the relative location information includes an elevation angle of the terminal device relative to the first satellite, and/or a distance between the terminal device and an edge of a service area.

Optionally, the apparatus 1600 further includes a third transmitting unit, which may be configured to transmit the first time information when a system information block includes beam information of any satellite in the plurality of satellites.

Optionally, the first satellite is one of a plurality of satellites related to the terminal device, the plurality of satellites further include one or more satellites other than the first satellite, the first time period is determined based on a first duration and a second duration, the first duration is a duration between the current instant and an instant at which the terminal device leaves the service area, and the second duration is a shortest duration among one or more durations between the current instant and one or more instants at which the one or more satellites start to provide a service for the terminal device.

Optionally, the apparatus 1600 further includes a second execution unit, executing, according to a first condition, a handover from the first satellite to a second satellite corresponding to the second duration when the first duration is greater than or equal to the second duration. The first execution unit 1620 is further configured to switch from an RRC active state to an RRC idle state when the first duration is less than the second duration.

Optionally, the first condition is related to a handover condition for the terminal device to execute a satellite handover and/or a service requirement of the terminal device.

Optionally, the first time information is carried in one or more of the following information: auxiliary information of the terminal device, a downlink channel quality report, or an access stratum release auxiliary indication.

Optionally, the first execution unit 1620 is further configured to: when an actual time at which the terminal device enters the network non-coverage is earlier than a time indicated by the first time information, switch from an RRC active state to an RRC idle state after triggering N radio link failures, where N is a natural number greater than or equal to 1.

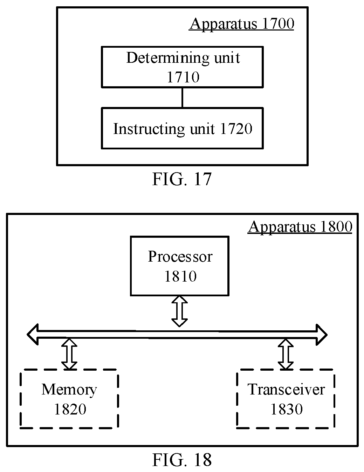

FIG. 17 is a schematic block diagram of another apparatus for wireless communication according to an embodiment of the present application. The apparatus 1700 may be any type of network device described above. The apparatus 1700 shown in FIG. 17 includes a determining unit 1710 and an instructing unit 1720.

The determining unit 1710 may be configured to determine first time information.

The instructing unit 1720 may be configured to instruct, based on the first time information, the terminal device to execute switching from a first state to a second state, where the first time information is related to a first time period and/or a second time period, the first time period is a time period from a current instant to a start instant at which the terminal device enters network non-coverage, and the second time period is a duration of the network non-coverage.

Optionally, the first state is an RRC idle state or a PSM state, the first time information further includes a third time period in which a first serving cell provides a service for the terminal device, and a duration of the third time period is used by the terminal device to determine whether to establish an RRC connection with the first serving cell.

Optionally, the first state is an RRC active state, the second state is an RRC idle state, and the apparatus 1700 further includes a first receiving unit, which may be configured to receive the first time information transmitted by the terminal device; and a transmitting unit, which may be configured to transmit first indication information to the terminal device, where the first indication information includes a switching occasion for the terminal device to switch from the RRC active state to the RRC idle state.

Optionally, the first state is an RRC active state, the second state is an RRC idle state, and the apparatus 1700 further includes a second receiving unit, which may be configured to receive second indication information transmitted by the terminal device, where the second indication information indicates that the RRC idle state is a preferred state, and the second indication information is used by the terminal device to determine, based on a first timer, a switching occasion for switching from the RRC active state to the RRC idle state.

Optionally, the switching occasion is related to one or more of the following information: a service type of the terminal device, a service priority of the terminal device, or downlink data of the network device.

Optionally, the switching occasion is determined based on a first factor δ(x,y), where x is related to the service type, y is related to the service priority, and 0 < δ(x,y) ≤ 1.

Optionally, a fourth time period between the switching occasion and the current instant is a product of the first time period and a second factor, and the second factor is greater than 0 and less than 1.

Optionally, the network device includes a first satellite in an NTN, and the terminal device is located in a service area of the first satellite at the current instant.

Optionally, the first time information is related to one or more of the following information: location information of the terminal device; relative location information between the terminal device and the first satellite; or relevant information of a plurality of satellites related to the terminal device, where the plurality of satellites include the first satellite, and the relevant information of the plurality of satellites includes at least one of ephemeris information of the plurality of satellites, location information of the plurality of satellites, beam information of the plurality of satellites, or time information of providing services for the terminal device by the plurality of satellites.

Optionally, the relative location information includes an elevation angle of the terminal device relative to the first satellite, and/or a distance between the terminal device and an edge of a service area.

Optionally, the apparatus 1700 further includes a third receiving unit, which may be configured to receive the first time information when a system information block includes beam information of any satellite in the plurality of satellites.

Optionally, the first satellite is one of a plurality of satellites related to the terminal device, the plurality of satellites further include one or more satellites other than the first satellite, the first time period is determined based on a first duration and a second duration, the first duration is a duration between the current instant and an instant at which the terminal device leaves the service area, and the second duration is a shortest duration among one or more durations between the current instant and one or more instants at which the one or more satellites start to provide a service for the terminal device.

Optionally, the first time information is carried in one or more of the following information: auxiliary information of the terminal device, a downlink channel quality report, or an access stratum release auxiliary indication.

FIG. 18 is a schematic structural diagram of a communications apparatus according to an embodiment of the present application. The dotted line in FIG. 18 indicates that the unit or module is optional. The apparatus 1800 may be configured to implement a method described in the foregoing method embodiments. The apparatus 1800 may be a chip, a terminal device, or a network device.

The apparatus 1800 may include one or more processors 1810. The processor 1810 may support the apparatus 1800 to implement a method described in the foregoing method embodiments. The processor 1810 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field-programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 1800 may further include one or more memories 1820. The memory 1820 stores a program, and the program may be executed by the processor 1810, so that the processor 1810 executes a method described in the foregoing method embodiments. The memory 1820 may be separate from the processor 1810 or may be integrated into the processor 1810.

The apparatus 1800 may further include a transceiver 1830. The processor 1810 may communicate with another device or chip by using the transceiver 1830. For example, the processor 1810 may transmit data to and receive data from another device or chip through the transceiver 1830.

An embodiment of the present application further provides a computer-readable storage medium, storing a program. The computer-readable storage medium may be applied to a terminal device or a network device provided in embodiments of the present application, and the program causes the computer to execute a method executed by a terminal device or a network device in embodiments of the present application.

The computer-readable storage medium may be any available medium that can be read by a computer, or a data storage device such as a server or a data center that includes one or more available media integrations. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid state disk, SSD)), or the like.

An embodiment of the present application further provides a computer program product. The computer program product includes a program. The computer program product may be applied to a terminal device or a network device provided in embodiments of the present application, and the program causes the computer to execute a method executed by a terminal or a network device in embodiments of the present application.

Some or all of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to embodiments of the present application are all or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (such as a coaxial cable, an optical fiber, and a digital subscriber line (digital subscriber line, DSL)) manner or a wireless (such as infrared, radio, and microwave) manner.

An embodiment of the present application further provides a computer program. The computer program may be applied to a terminal device or a network device provided in embodiments of the present application, and the computer program causes the computer to execute a method executed by a terminal or a network device in embodiments of the present application.

In the present application, the term "system" and "network" may be used interchangeably. In addition, the terms used in the present application are used only to illustrate specific embodiments of the present application, but are not intended to limit the present application. The terms "first", "second", "third", "fourth", and the like in the specification, claims, and accompanying drawings of the present application are used for distinguishing different objects from each other, rather than defining a specific order. In addition, the terms "include" and "have" and any variations thereof are intended to cover a non-exclusive inclusion.

In embodiments of the present application, "indication" mentioned herein may refer to a direct indication, or may refer to an indirect indication, or may mean that there is an association relationship. For example, if A indicates B, it may mean that A directly indicates B, for example, B may be obtained from A. Alternatively, it may mean that A indicates B indirectly, for example, A indicates C, and B may be obtained from C. Alternatively, it may mean that there is an association relationship between A and B.

In embodiments of the present application, the term "corresponding" may mean that there is a direct or indirect correspondence between two elements, or that there is an association relationship between two elements, or that there is a relationship of "indicating" and "being indicated", "configuring" and "being configured", or the like.

In embodiments of the present application, "pre-defining" or "pre-configuring" may be implemented by pre-storing corresponding code or a corresponding table in a device (for example, including a terminal device and a network device) or in other manners that may be used for indicating related information. A specific implementation thereof is not limited in the present application. For example, being pre-defined may refer to being defined in a protocol.

In embodiments of the present application, the "protocol" may refer to a standard protocol in the communications field, for example, may include an LTE protocol, an NR protocol, and a related protocol applied to a future communications system. This is not limited in the present application.

In embodiments of the present application, determining B based on A does not mean determining B based on A only, and may further determine B based on A and/or other information.

In embodiments of the present application, the term "and/or" is merely an association relationship that describes associated objects, and represents that there may be three relationships. For example, A and/or B may represent three cases: only A exists, both A and B exist, and only B exists. In addition, the character "/" in this specification generally indicates an "or" relationship between the associated objects.

In embodiments of the present application, a sequence number of the foregoing processes does not mean a sequence of execution. The execution sequence of the processes should be determined based on functions and internal logic of the processes, and should not constitute any limitation on the implementation processes of embodiments of the present application.

In several embodiments provided in the present application, it should be understood that the disclosed system, apparatus, and method may be implemented in another manner. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented as indirect couplings or communication connections through some interfaces, apparatus or units, and may be implemented in electronic, mechanical, or other forms.

The units described as separate parts may be or may not be physically separate, and parts displayed as units may be or may not be physical units, and may be at one location, or may be distributed on a plurality of network elements. Some or all of the units may be selected according to actual requirements to achieve the objective of the solutions of embodiments.

In addition, functional units in embodiments of the present application may be integrated into one processing unit, or each of the units may exist alone physically, or two or more units may be integrated into one unit.

The foregoing descriptions are merely specific implementations of the present application, but the protection scope of the present application is not limited thereto. Any variation or replacement readily figured out by a person skilled in the art within the technical scope disclosed in the present application shall fall within the protection scope of the present application. Therefore, the protection scope of the present application shall be subject to the protection scope of the claims.

## Claims

1. A method for wireless communication, comprising:
determining, by a terminal device, first time information; and
executing, by the terminal device based on the first time information, switching from a first state to a second state,
wherein the first time information is related to a first time period and/or a second time period, the first time period is a time period from a current instant to a start instant at which the terminal device enters network non-coverage, and the second time period is a duration of the network non-coverage.

2. The method according to claim 1, wherein the first state is a radio resource control RRC idle state or a power saving mode PSM state, the first time information further comprises a third time period in which a first serving cell provides a service for the terminal device, and a duration of the third time period is used by the terminal device to determine whether to establish an RRC connection with the first serving cell.

3. The method according to claim 1, wherein the first state is an RRC active state, the second state is an RRC idle state, and the method further comprises:
transmitting, by the terminal device, the first time information to a network device; and
receiving, by the terminal device, first indication information transmitted by the network device, wherein the first indication information comprises a switching occasion for the terminal device to switch from the RRC active state to the RRC idle state.

4. The method according to claim 1, wherein the first state is an RRC active state, the second state is an RRC idle state, and the method further comprises:
starting, by the terminal device, a first timer when transmitting the first time information, wherein the first timer is used by the terminal device to determine a switching occasion for switching from the RRC active state to the RRC idle state.

5. The method according to claim 4, wherein the method further comprises:
transmitting, by the terminal device, second indication information to a network device, wherein the second indication information indicates that the RRC idle state is a preferred state; and
when the first timer expires, switching, by the terminal device, from the RRC active state to the RRC idle state.

6. The method according to claim 3 or 4, wherein the switching occasion is related to one or more of following information: a service type of the terminal device, a service priority of the terminal device, or downlink data of the network device.

7. The method according to claim 6, wherein the switching occasion is determined based on a first factor δ(x,y), wherein x is related to the service type, y is related to the service priority, and 0 < δ(x,y) ≤ 1.

8. The method according to claim 6, wherein a fourth time period between the switching occasion and the current instant is a product of the first time period and a second factor, and the second factor is greater than 0 and less than 1.

9. The method according to claim 1, wherein the first state is a PSM state, and the method further comprises:
determining, by the terminal device based on a first periodicity, an occasion for being woken up,
wherein the first periodicity is determined based on the first time period and the second time period.

10. The method according to any one of claims 1 to 9, wherein the terminal device is located in a service area of a first satellite in a non-terrestrial network NTN at the current instant.

11. The method according to claim 10, wherein the first time information is related to one or more of following information:
location information of the terminal device;
relative location information between the terminal device and the first satellite; or
relevant information of a plurality of satellites related to the terminal device,
wherein the plurality of satellites comprise the first satellite, and the relevant information of the plurality of satellites comprises at least one of ephemeris information of the plurality of satellites, location information of the plurality of satellites, beam information of the plurality of satellites, or time information of providing services for the terminal device by the plurality of satellites.

12. The method according to claim 11, wherein the relative location information comprises an elevation angle of the terminal device relative to the first satellite, and/or a distance between the terminal device and an edge of the service area.

13. The method according to claim 11, wherein the method further comprises:
when a system information block comprises beam information of any satellite in the plurality of satellites, transmitting, by the terminal device, the first time information.

14. The method according to any one of claims 10 to 13, wherein the first satellite is one of a plurality of satellites related to the terminal device, the plurality of satellites further comprise one or more satellites other than the first satellite, the first time period is determined based on a first duration and a second duration, the first duration is a duration between the current instant and an instant at which the terminal device leaves the service area, and the second duration is a shortest duration among one or more durations between the current instant and one or more instants at which the one or more satellites start to provide a service for the terminal device.

15. The method according to claim 14, wherein the method further comprises:
when the first duration is greater than or equal to the second duration, executing, by the terminal device according to a first condition, a handover from the first satellite to a second satellite corresponding to the second duration;
when the first duration is less than the second duration, switching, by the terminal device, from an RRC active state to an RRC idle state.

16. The method according to claim 15, wherein the first condition is related to a handover condition for the terminal device to execute a satellite handover and/or a service requirement of the terminal device.

17. The method according to any one of claims 1 to 16, wherein the first time information is carried in one or more of following information: auxiliary information of the terminal device, a downlink channel quality report, or an access stratum release auxiliary indication.

18. The method according to any one of claims 1 to 17, wherein the method further comprises:
when an actual time at which the terminal device enters the network non-coverage is earlier than a time indicated by the first time information, switching, by the terminal device, from an RRC active state to an RRC idle state after triggering N radio link failures, wherein N is a natural number greater than or equal to 1.

19. A method for wireless communication, comprising:
determining, by a network device, first time information; and
instructing, by the network device based on the first time information, a terminal device to execute switching from a first state to a second state,
wherein the first time information is related to a first time period and/or a second time period, the first time period is a time period from a current instant to a start instant at which the terminal device enters network non-coverage, and the second time period is a duration of the network non-coverage.

20. The method according to claim 19, wherein the first state is a radio resource control RRC idle state or a power saving mode PSM state, the first time information further comprises a third time period in which a first serving cell provides a service for the terminal device, and a duration of the third time period is used by the terminal device to determine whether to establish an RRC connection with the first serving cell.

21. The method according to claim 19, wherein the first state is an RRC active state, the second state is an RRC idle state, and the method further comprises:
receiving, by the network device, the first time information transmitted by the terminal device; and
transmitting, by the network device, first indication information to the terminal device, wherein the first indication information comprises a switching occasion for the terminal device to switch from the RRC active state to the RRC idle state.

22. The method according to claim 19, wherein the first state is an RRC active state, the second state is an RRC idle state, and the method further comprises:
receiving, by the network device, second indication information transmitted by the terminal device, wherein the second indication information indicates that the RRC idle state is a preferred state, and the second indication information is used by the terminal device to determine, based on a first timer, a switching occasion for switching from the RRC active state to the RRC idle state.

23. The method according to claim 21 or 22, wherein the switching occasion is related to one or more of following information: a service type of the terminal device, a service priority of the terminal device, or downlink data of the network device.

24. The method according to claim 23, wherein the switching occasion is determined based on a first factor δ(x,y), wherein x is related to the service type, y is related to the service priority, and 0 < δ(x,y) ≤ 1.

25. The method according to claim 23, wherein a fourth time period between the switching occasion and the current instant is a product of the first time period and a second factor, and the second factor is greater than 0 and less than 1.

26. The method according to any one of claims 19 to 25, wherein the network device comprises a first satellite in a non-terrestrial network NTN, and the terminal device is located in a service area of the first satellite at the current instant.

27. The method according to claim 26, wherein the first time information is related to one or more of following information:
location information of the terminal device;
relative location information between the terminal device and the first satellite; or
relevant information of a plurality of satellites related to the terminal device,
wherein the plurality of satellites comprise the first satellite, and the relevant information of the plurality of satellites comprises at least one of ephemeris information of the plurality of satellites, location information of the plurality of satellites, beam information of the plurality of satellites, or time information of providing services for the terminal device by the plurality of satellites.

28. The method according to claim 27, wherein the relative location information comprises an elevation angle of the terminal device relative to the first satellite, and/or a distance between the terminal device and an edge of the service area.

29. The method according to claim 27, wherein the method further comprises:
when a system information block comprises beam information of any satellite in the plurality of satellites, receiving, by the network device, the first time information.

30. The method according to any one of claims 26 to 29, wherein the first satellite is one of a plurality of satellites related to the terminal device, the plurality of satellites further comprise one or more satellites other than the first satellite, the first time period is determined based on a first duration and a second duration, the first duration is a duration between the current instant and an instant at which the terminal device leaves the service area, and the second duration is a shortest duration among one or more durations between the current instant and one or more instants at which the one or more satellites start to provide a service for the terminal device.

31. The method according to any one of claims 19 to 30, wherein the first time information is carried in one or more of following information: auxiliary information of the terminal device, a downlink channel quality report, or an access stratum release auxiliary indication.

32. An apparatus for wireless communication, wherein the apparatus is a terminal device, and the apparatus comprises:
a determining unit, determining first time information; and
a first execution unit, executing, based on the first time information, switching from a first state to a second state,
wherein the first time information is related to a first time period and/or a second time period, the first time period is a time period from a current instant to a start instant at which the terminal device enters network non-coverage, and the second time period is a duration of the network non-coverage.

33. The apparatus according to claim 32, wherein the first state is a radio resource control RRC idle state or a power saving mode PSM state, the first time information further comprises a third time period in which a first serving cell provides a service for the terminal device, and a duration of the third time period is used by the terminal device to determine whether to establish an RRC connection with the first serving cell.

34. The apparatus according to claim 32, wherein the first state is an RRC active state, the second state is an RRC idle state, and the apparatus further comprises:
a first transmitting unit, transmitting the first time information to a network device; and
a first receiving unit, receiving first indication information transmitted by the network device, wherein the first indication information comprises a switching occasion for the terminal device to switch from the RRC active state to the RRC idle state.

35. The apparatus according to claim 32, wherein the first state is an RRC active state, the second state is an RRC idle state, and the apparatus further comprises:
a processing unit, starting a first timer when the first time information is transmitted, wherein the first timer is used by the terminal device to determine a switching occasion for switching from the RRC active state to the RRC idle state.

36. The apparatus according to claim 35, wherein the apparatus further comprises:
a second transmitting unit, transmitting second indication information to a network device, wherein the second indication information indicates that the RRC idle state is a preferred state; and
the first execution unit is further configured to switch from the RRC active state to the RRC idle state when the first timer expires.

37. The apparatus according to claim 34 or 35, wherein the switching occasion is related to one or more of following information: a service type of the terminal device, a service priority of the terminal device, or downlink data of the network device.

38. The apparatus according to claim 37, wherein the switching occasion is determined based on a first factor δ(x,y), wherein x is related to the service type, y is related to the service priority, and 0 < δ(x,y) ≤ 1.

39. The apparatus according to claim 37, wherein a fourth time period between the switching occasion and the current instant is a product of the first time period and a second factor, and the second factor is greater than 0 and less than 1.

40. The apparatus according to claim 32, wherein the first state is a PSM state, and the determining unit is further configured to determine, based on a first periodicity, an occasion for being woken up, wherein the first periodicity is determined based on the first time period and the second time period.

41. The apparatus according to any one of claims 32 to 40, wherein the terminal device is located in a service area of a first satellite in a non-terrestrial network NTN at the current instant.

42. The apparatus according to claim 41, wherein the first time information is related to one or more of following information:
location information of the terminal device;
relative location information between the terminal device and the first satellite; or
relevant information of a plurality of satellites related to the terminal device,
wherein the plurality of satellites comprise the first satellite, and the relevant information of the plurality of satellites comprises at least one of ephemeris information of the plurality of satellites, location information of the plurality of satellites, beam information of the plurality of satellites, or time information of providing services for the terminal device by the plurality of satellites.

43. The apparatus according to claim 42, wherein the relative location information comprises an elevation angle of the terminal device relative to the first satellite, and/or a distance between the terminal device and an edge of the service area.

44. The apparatus according to claim 42, wherein the apparatus further comprises:
a third transmitting unit, transmitting the first time information when a system information block comprises beam information of any satellite in the plurality of satellites.

45. The apparatus according to any one of claims 41 to 44, wherein the first satellite is one of a plurality of satellites related to the terminal device, the plurality of satellites further comprise one or more satellites other than the first satellite, the first time period is determined based on a first duration and a second duration, the first duration is a duration between the current instant and an instant at which the terminal device leaves the service area, and the second duration is a shortest duration among one or more durations between the current instant and one or more instants at which the one or more satellites start to provide a service for the terminal device.

46. The apparatus according to claim 45, wherein the apparatus further comprises:
a second execution unit, executing, according to a first condition, a handover from the first satellite to a second satellite corresponding to the second duration when the first duration is greater than or equal to the second duration; and
the first execution unit is further configured to: when the first duration is less than the second duration, switch from an RRC active state to an RRC idle state.

47. The apparatus according to claim 46, wherein the first condition is related to a handover condition for the terminal device to execute a satellite handover and/or a service requirement of the terminal device.

48. The apparatus according to any one of claims 32 to 47, wherein the first time information is carried in one or more of following information: auxiliary information of the terminal device, a downlink channel quality report, or an access stratum release auxiliary indication.

49. The apparatus according to any one of claims 32 to 48, wherein the first execution unit is further configured to: when an actual time at which the terminal device enters the network non-coverage is earlier than a time indicated by the first time information, switch from an RRC active state to an RRC idle state after triggering N radio link failures, wherein N is a natural number greater than or equal to 1.

50. An apparatus for wireless communication, wherein the apparatus is a network device, and the apparatus comprises:
a determining unit, determining first time information; and
an instructing unit, instructing, based on the first time information, a terminal device to execute switching from a first state to a second state,
wherein the first time information is related to a first time period and/or a second time period, the first time period is a time period from a current instant to a start instant at which the terminal device enters network non-coverage, and the second time period is a duration of the network non-coverage.

51. The apparatus according to claim 50, wherein the first state is a radio resource control RRC idle state or a power saving mode PSM state, the first time information further comprises a third time period in which a first serving cell provides a service for the terminal device, and a duration of the third time period is used by the terminal device to determine whether to establish an RRC connection with the first serving cell.

52. The apparatus according to claim 50, wherein the first state is an RRC active state, the second state is an RRC idle state, and the apparatus further comprises:
a first receiving unit, receiving the first time information transmitted by the terminal device; and
a transmitting unit, transmit first indication information to the terminal device, wherein the first indication information comprises a switching occasion for the terminal device to switch from the RRC active state to the RRC idle state.

53. The apparatus according to claim 50, wherein the first state is an RRC active state, the second state is an RRC idle state, and the apparatus further comprises:
a second receiving unit, receiving second indication information transmitted by the terminal device, wherein the second indication information indicates that the RRC idle state is a preferred state, and the second indication information is used by the terminal device to determine, based on a first timer, a switching occasion for switching from the RRC active state to the RRC idle state.

54. The apparatus according to claim 52 or 53, wherein the switching occasion is related to one or more of following information: a service type of the terminal device, a service priority of the terminal device, or downlink data of the network device.

55. The apparatus according to claim 54, wherein the switching occasion is determined based on a first factor δ(x,y), wherein x is related to the service type, y is related to the service priority, and 0 < δ(x,y) ≤ 1.

56. The apparatus according to claim 54, wherein a fourth time period between the switching occasion and the current instant is a product of the first time period and a second factor, and the second factor is greater than 0 and less than 1.

57. The apparatus according to any one of claims 50 to 56, wherein the network device comprises a first satellite in a non-terrestrial network NTN, and the terminal device is located in a service area of the first satellite at the current instant.

58. The apparatus according to claim 57, wherein the first time information is related to one or more of following information:
location information of the terminal device;
relative location information between the terminal device and the first satellite; or
relevant information of a plurality of satellites related to the terminal device,
wherein the plurality of satellites comprise the first satellite, and the relevant information of the plurality of satellites comprises at least one of ephemeris information of the plurality of satellites, location information of the plurality of satellites, beam information of the plurality of satellites, or time information of providing services for the terminal device by the plurality of satellites.

59. The apparatus according to claim 58, wherein the relative location information comprises an elevation angle of the terminal device relative to the first satellite, and/or a distance between the terminal device and an edge of the service area.

60. The apparatus according to claim 58, wherein the apparatus further comprises:
a third receiving unit, receiving the first time information when a system information block comprises beam information of any satellite in the plurality of satellites.

61. The apparatus according to any one of claims 57 to 60, wherein the first satellite is one of a plurality of satellites related to the terminal device, the plurality of satellites further comprise one or more satellites other than the first satellite, the first time period is determined based on a first duration and a second duration, the first duration is a duration between the current instant and an instant at which the terminal device leaves the service area, and the second duration is a shortest duration among one or more durations between the current instant and one or more instants at which the one or more satellites start to provide a service for the terminal device.

62. The apparatus according to any one of claims 50 to 61, wherein the first time information is carried in one or more of following information: auxiliary information of the terminal device, a downlink channel quality report, or an access stratum release auxiliary indication.

63. A communications apparatus, comprising a memory and a processor, wherein the memory is configured to store a program, and the processor is configured to invoke the program in the memory to execute a method according to any one of claims 1 to 31.

64. An apparatus, comprising a processor, invoking a program from a memory to execute a method according to any one of claims 1 to 31.

65. A chip, comprising a processor, invoking a program from a memory, so that a device on which the chip is installed executes a method according to any one of claims 1 to 31.

66. A computer-readable storage medium, wherein the computer-readable storage medium stores a program, and the program causes a computer to execute a method according to any one of claims 1 to 31.

67. A computer program product, comprising a program, wherein the program causes a computer to execute a method according to any one of claims 1 to 31.

68. A computer program, wherein the computer program causes a computer to execute a method according to any one of claims 1 to 31.
